# EUROPÄISCHE PATENTSCHRIFT

(11) **EP 2 788 283 B1**
(45) Veröffentlichungstag und Bekanntmachung des Hinweises auf die Patenterteilung: **27.03.2019**
(21) Anmeldenummer: 13721336.9
(22) Anmeldetag: 06.05.2013
(51) Int. Cl.: C01B 11/02

(54) **VORRICHTUNG UND VERFAHREN ZUR HERSTELLUNG WÄSSRIGER CHLORDIOXIDLÖSUNGEN SOWIE VORRATSEINHEITEN UND KITS ZUR ENTSPRECHENDEN VERWENDUNG**
DEVICE AND METHOD FOR PRODUCING AQUEOUS CHLORINE DIOXIDE SOLUTIONS, AND STORAGE UNITS AND KITS FOR CORRESPONDING USAGE
DISPOSITIF ET PROCÉDÉ DE PRODUCTION DE SOLUTIONS AQUEUSES DE DIOXYDE DE CHLORE AINSI QU'UNITÉS DE STOCKAGE ET ENSEMBLES POUR UNE UTILISATION CORRESPONDANTE

(30) Priorität: 04.05.2012 DE 102012207472
(43) Veröffentlichungstag der Anmeldung: 15.10.2014
(73) Patentinhaber: Küke, Fritz, 30916 Isernhagen (DE)
(72) Erfinder: Küke, Fritz, 30916 Isernhagen (DE)
(74) Vertreter: Eisenführ Speiser
(86) Internationale Anmeldenummer: PCT/EP2013/059337
(87) Internationale Veröffentlichungsnummer: WO 2013/164486

(56) Entgegenhaltungen:
- EP-A2- 0 231 862
- WO-A1-03/055797
- WO-A1-2012/084247
- DE-A1- 19 518 464
- DE-A1-102010 011 699
- US-A- 3 442 778

## Beschreibung

Die vorliegende Erfindung betrifft eine Vorrichtung zur Herstellung wässriger Chlordioxid-Lösungen, eine auswechselbare Vorratseinheit für eine solche Vorrichtung, ein Kit umfassend oder bestehend aus einer oder mehreren auswechselbaren Vorratseinheiten sowie ein Verfahren zur Herstellung einer Chlordioxid enthaltenden, unmittelbar zur Wasseraufbereitung einsetzbaren Lösung.

Der Gegenstand der Erfindung ist in den beigefügten Patentansprüchen definiert.

Verfahren zur Herstellung wässriger Chlordioxid-Lösungen sind aus dem Stand der Technik bekannt.

So betrifft die europäische Patentschrift EP 0 822 920 B1 beispielsweise ein Verfahren zur Herstellung einer Chlordioxid enthaltenden Desinfektionslösung zur Wasseraufbereitung. Die Patentschrift verweist selbst wiederum auf eine Reihe von Veröffentlichungen aus dem Stand der Technik, welche die Erzeugung von Chlordioxid betreffen.

Das Verfahren gemäß EP 0 822 920 B1 ist heute im Allgemeinen als Peroxodisulfat-Chlorit-Verfahren bekannt und hat beispielsweise Eingang gefunden in das DVGW-Regelwerk Arbeitsblatt W 224 (in der Ausgabe vom Februar 2010, vgl. Punkt 6.4, dort ist das Verfahren als Chlorit-/Peroxodisulfat-Verfahren bezeichnet).

Das Peroxodisulfat-Chlorit-Verfahren hat auch Eingang gefunden in ÖNORM M5879-3 (Ausgabe 2010-11-01), Teil 3: Chlordioxid-Anlagen. Anhang A der ÖNORM M5879-3 in der Ausgabe vom 1. November 2010 betrifft die "Ausstattung der Chlordioxid-Erzeugungsanlagen nach dem Chlorit-Natriumperoxodisulfat-Verfahren" und zeigt auch eine schematische Darstellung einer "Anlage mit Reaktor zur einmaligen Verwendung". Es wird dabei davon ausgegangen, dass die beiden Reaktionspartner Natriumperoxodisulfat sowie Natriumchlorit jeweils in wässriger Lösung und separat voneinander bereitgestellt werden.

Ein Zweikomponentensystem zur Erzeugung von Chlordioxid-Lösungen bestehend aus Natriumchlorit-Lösung und Natriumperoxodisulfat ist auch bereits aus DVGW-Arbeitsblatt W 291 bekannt (in der Ausgabe vom März 2010, vgl. dort Punkt 5.3.5). Gemäß diesem Regelwerk wird Natriumperoxodisulfat als Salz eingesetzt.

Alternative Verfahren zur Herstellung von Chlordioxid basieren nicht auf der Kombination von Peroxodisulfat und Chlorit. So offenbart beispielsweise die Patentschrift EP 1 494 967 B1 ein Verfahren zur Herstellung von Chlordioxid im Gemisch mit Sauerstoff durch Reaktion von Chlorit mit Peroxomonosulfat in Gegenwart von Peroxodisulfat als Redoxinitiator in sauer wässriger Lösung.

Die oben bereits genannte ÖNORM M5879-03: 2010 offenbart eine Reihe von Chlordioxid-Erzeugungsanlagen, vgl. dort Punkt 6. Insbesondere offenbart werden Anlagen für das Chlorit-Chlorgas-Verfahren und das Chlorit-Säure-Verfahren.

DVGW-Arbeitsblatt W 224 offenbart neben dem bereits erwähnten Chlorit-/Peroxodisulfat-Verfahren das Chlorit-/Chlor-Verfahren und das Chlorit-/Salzsäure-Verfahren.

Auch die europäische Norm EN12671 offenbart das Peroxodisulfat-Chlorit-Verfahren.

DVGW-Merkblatt W 624 vom Oktober 1996 offenbart Chlordioxid-Anlagen nach dem Chlorit-/Chlor-Verfahren sowie nach dem Chlorit-/Säure-Verfahren.

DE 195 18 464 A1 offenbart Verfahren zur Herstellung stabilisierter Chlordioxid enthaltenden Lösungen aus trockenen Ausgangsstoffen. WO 2012/084247A1 offenbart Verfahren zur Herstellung einer wässrigen stabilen Chlordioxidlösung. Offenbarungen zum technischen Hintergrund finden sich auch in den Dokumenten US 3442778 A, DE 102010011699 A1, EP 0231862 A1 und WO 03/055797.

Bei der Herstellung von Chlordioxid entsteht ein Produkt mit hohem Gefährdungspotential aus Edukten, welche ihrerseits als gefährlich anzusehen sind. Deswegen besteht ein ständiger Bedarf an Verbesserungen der für die Herstellung von Chlordioxid bekannten Verfahren und Anlagen in Richtung bestmöglicher Sicherheit für den Nutzer. Soweit wässrige Chlordioxid-Lösungen manuell hergestellt werden, muss geschultes Personal eingesetzt werden, welches die jeweilige Reaktionslösung aus insbesondere vorkonfektionierten Eduktlösungen gewissenhaft herstellt.

ÖNORM M5879-3: 2010 offenbart in Anhang A bereits eine Chlordioxid-Erzeugungsanlage nach dem Chlorit-Natriumperoxodisulfat-Verfahren, wobei von einer flüssigen Natriumperoxodisulfat-Lösung und einer Natriumchlorit-Lösung ausgegangen wird. Die automatisierte Verfahrensgestaltung ist zwar im Vergleich mit einer manuellen Herstellung durchaus sicherer, doch ist sie mit dem Nachteil verknüpft, dass Lösungen von Natriumperoxodisulfat insbesondere bei niedrigen pH-Werten, wie sie nach dem Auflösen von Natriumperoxodisulfat in Wasser vorliegen, vergleichsweise schnell wieder zerfallen. Dieser schnelle Zerfall saurer wässriger Lösungen von Natriumperoxodisulfat wurde durch Untersuchungen der Philipps-Universität Marburg, Fachbereich Chemie, Professor Dr. Andreas Seubert, bestätigt. Eine ausreichend lange Lagerung saurer Natriumperoxodisulfat-Lösungen ohne Zerfall des Natriumperoxodisulfats ist somit nicht möglich. Eine wesentlich erhöhte Lagerstabilität von Natriumperoxodisulfat-Lösungen kann zwar durch Einstellen von pH-Werten > 6 erreicht werden; jedoch ist zur Durchführung des Peroxodisulfat-Chlorit-Verfahrens bei Einstellung eines pH-Wertes > 6 in der Natriumperoxodisulfat-Lösung erforderlich, zur Herstellung der Reaktionslösung zusätzliche Mengen an Säure einzusetzen, denn die einzusetzende Chlorit-Lösung ist ihrerseits zur Wahrung der Lagerstabilität stark alkalisch (pH > 11) eingestellt. Mit anderen Worten lässt sich zwar eine stabile Natriumperoxodisulfat-Lösung einstellen (pH > 6), doch zwingt dies in der Praxis dazu, eine dritte Komponente (Säure) vorzusehen, wenn das Natriumperoxodisulfat-Chlorit-Verfahren durchgeführt werden soll.

In der Praxis finden bei der Herstellung von Chlordioxid-Lösungen auch vereinzelt Feststoffe Verwendung, die dann aber manuell in eine Wasservorlage eindosiert werden, vgl. zum Beispiel das Verfahren gemäß EP 1 494 967 B1. Als nachteilig wird insoweit empfunden, dass der Nutzer bei händischem Zudosieren in Kontakt mit dem bzw. den in fester Form vorliegenden Edukten kommen kann, was für die Gesundheit nachteilig sein kann, sowie durch spontane Bildung von Chlordioxid in einem solchen offenen System auch dem toxischen Chlordioxidgas ausgesetzt werden kann.

Es ist eine primäre Aufgabe der vorliegenden Erfindung, eine Vorrichtung zur Herstellung wässriger Chlordioxid-Lösungen anzugeben, welche das Risiko für den Nutzer bei Herstellung der Chlordioxid-Lösung reduziert und vorzugsweise dabei die Herstellung vereinfacht. Entsprechend sollte ein sichereres und vorzugsweise einfacheres Verfahren zur Herstellung von Chlordioxid angegeben werden.

Erfindungsgemäß wird gemäß einem ersten Aspekt der vorliegenden Erfindung die gestellte primäre Aufgabe gelöst durch eine Vorrichtung zur Herstellung wässriger Chlordioxid-Lösungen, wie sie in den Ansprüchen definiert ist.

Offenbart wird auch eine Vorrichtung zur Herstellung wässriger Chlordioxid-Lösungen, umfassend
(a) einen Reaktor,
(b) eine erste Vorratseinheit,
   - umfassend einen ersten Reaktanten zur Herstellung von Chlordioxid, wobei der erste Reaktant als Feststoff vorliegt,
   - mit einem Einlass für Wasser und einem davon getrennten Auslass,
   - wobei die erste Vorratseinheit auswechselbar angeordnet ist,
(c) eine zweite Vorratseinheit zum Bevorraten eines zweiten Reaktanten zur Herstellung von Chlordioxid,
wobei die erste Vorratseinheit (8) zuleitungs- und/oder ableitungsseitig mit Rohrschnellverschlüssen ausgestattet ist
und/oder
wobei der Einlass für Wasser (15) mittels eines Schnellverschlusses mit der Zuleitung (9) flüssigkeitsdicht verbindbar ist.

Entsprechend betrifft die vorliegende Erfindung auch eine auswechselbare Vorratseinheit für eine erfindungsgemäße Vorrichtung, wie sie in den Ansprüchen definiert ist.

Die vorliegende Erfindung beruht auf der überraschenden Erkenntnis, dass wässrige Chlordioxid-Lösung sicher und einfach hergestellt werden kann, wenn ein dazu geeigneter erster Reaktant als Feststoff vorliegt und in einer (ersten) Vorratseinheit bereitgestellt wird, die einen Wassereinlass und einen davon getrennten Auslass besitzt und in der Gesamt-Vorrichtung auswechselbar angeordnet ist. Im Peroxodisulfat-Chlorit-Verfahren ist insbesondere das Peroxodisulfat ein geeigneter erster Reaktant, der in einer erfindungsgemäßen Vorrichtung als Feststoff vorliegen kann. Es wurde bereits weiter oben ausgeführt, dass wässrige Lösungen von Peroxodisulfat bei niedrigem pH instabil sind, andererseits aber der Einsatz alkalisch eingestellter wässriger Lösungen von Peroxodisulfat die Anwesenheit von Säure als dritter Komponente erfordert. Dieser Nachteil des Einsatzes von wässriger Peroxodisulfat-Lösung ist überwunden, sofern in einer erfindungsgemäßen Vorrichtung festes Peroxodisulfat in der ersten Vorratseinheit bereitgestellt wird. Alternativ kann aber durchaus auch die Chlorit-Komponente eines Peroxodisulfat-Chlorit-Systems als erster, im festen Zustand vorliegender Reaktant vorgesehen sein. Hiermit sind im Einzelfall - wie ähnlich auch beim Einsatz von Peroxodisulfat als erstem, festen Reaktanten - Vorteile beim Dosieren der Reaktanten verknüpft. Zudem wird auch insoweit der Kontakt des Nutzers mit einem gesundheitsgefährdenden Edukt vermieden.

Eine erfindungsgemäße Vorrichtung (vorzugsweise eine erfindungsgemäße Vorrichtung wie sie vorstehend als "bevorzugt" bezeichnet wurde) ist vorzugsweise zur Herstellung von unmittelbar zur Wasseraufbereitung einsetzbaren wässrigen Chlordioxid-Lösungen geeignet, vorzugsweise nach dem Peroxodisulfat-Chlorit-Verfahren, dem Natriumchlorit-Salzsäure-Verfahren, dem Chlorlösung : Chloritlösung Verfahren (Chemismus siehe: White, G.C.; Handbook of Chlorination and alternative Disinfectants; John Wiley & Sons, Inc., Weinheim, 1999; S.1162) oder dem Natriumchlorit-Lösung Schwefelsäure-Verfahren (Chemismus siehe: Böhmländer, F.; Entwicklung von Chlordioxyd aus Natriumchlorit-Lösung mit Hilfe von Schwefelsäure; Vom Wasser 29 (78) 1962, S.78 - 97). Die Vorrichtung ist ganz besonders geeignet zur Herstellung von unmittelbar zur Wasseraufbereitung einsetzbaren wässrigen Chlordioxid-Lösungen nach dem Peroxodisulfat-Chlorit-Verfahren und dem Natriumchlorit-Salzsäure-Verfahren.

Alternativ ist eine erfindungsgemäße Vorrichtung aber auch für andere Verfahren geeignet, bei denen zwei oder mehr Reaktanten zur Herstellung von Chlordioxid miteinander in Kontakt gebracht werden. Beispielsweise kann die erfindungsgemäße Vorrichtung im Chlorit-Schwefelsäure-Verfahren bzw. Chlorit-Hydrogensulfat-Verfahren Anwendung finden, wobei dann der Reaktant Chlorit als Feststoff in Form des Natrium-, Kalium-, Ammonium-, Calcium- oder Magnesiumsalzes in der ersten Vorratseinheit bereitgestellt wird.

Vorzugsweise umfasst eine erfindungsgemäße Vorrichtung (vorzugsweise eine vorstehend als "bevorzugt" bezeichnete erfindungsgemäße Vorrichtung) neben den weiter oben genannten Elementen auch
(d) eine flüssigkeitsdicht mit einem Einlass für Wasser verbundene Zuleitung zum Verbinden der ersten Vorratseinheit mit einem Wasservorrat.

Die erste Vorratseinheit einer erfindungsgemäßen Vorrichtung wird gemäß dieser Ausgestaltung vorzugsweise über eine übliche Zuleitung mit einem Wasservorrat verbunden, wobei der Wasservorrat in der Praxis ein übliches öffentliches oder betriebseigenes Wassernetz sein wird. Aus diesem öffentlichen Wassernetz oder einem anderen Wasservorrat wird im Betrieb Wasser in die erste Vorratseinheit geleitet, so dass der ursprünglich als Feststoff erste Reaktant vollständig oder teilweise gelöst wird. Der vollständig oder teilweise gelöste erste Reaktant wird dann dem Reaktor zugeführt, wo er mit dem zweiten Reaktanten vereinigt wird.

Eine erfindungsgemäße Vorrichtung, welche als Bestandteil (d) eine flüssigkeitsdicht mit dem Einlass für Wasser verbundene Zuleitung zum Verbinden der ersten Vorratseinheit mit einem Wasservorrat umfasst, umfasst vorzugsweise zudem
(e) eine Einrichtung zum Erwärmen und/oder Kühlen von Wasser, wobei die Einrichtung der besagten Zuleitung so zugeordnet ist, dass
- von ihr erwärmtes oder gekühltes Wasser über die Zuleitung der ersten Vorratseinheit zugeführt wird
   und/oder
- Wasser über die Zuleitung der Einrichtung zugeführt wird.

Es hat sich gezeigt, dass die Temperatur des Wassers im Wasservorrat (beispielsweise einem öffentlichen Wassernetz) nur in seltenen Fällen der Temperatur entspricht, die für ein schnelles und sicheres Auflösen des ersten Reaktanten gewünscht ist. Aus diesem Grunde ist es in einer Vielzahl von Fällen vorteilhaft, eine Einrichtung zum Erwärmen und/oder Kühlen des Wassers vorzusehen, das in der ersten Vorratseinheit in Kontakt mit dem ersten Reaktanten gelangt und dazu vorgesehen ist, diesen aufzulösen. Im Betrieb wird der Nutzer die Einrichtung so betreiben, dass das erwärmte oder gekühlte Wasser bei Eintritt in die erste Vorratseinheit eine für die Verfahrensgestaltung optimale Temperatur besitzt.

Die Einrichtung zum Erwärmen und/oder Kühlen von Wasser ist vorzugsweise ein Thermostat. In der Praxis ist ein Erwärmen häufig wichtiger als ein Kühlen, insbesondere im Peroxodisulfat-Chlorit-Verfahren, wobei zur Auflösung des Peroxodisulfat-Salzes häufig eine Temperatur von > 30° C eingestellt werden soll. Eine bevorzugte Einrichtung zum Erwärmen und/oder Kühlen von Wasser umfasst daher ein Heizelement. Besonders bevorzugt umfasst die Einrichtung sowohl ein Heizelement als auch ein Kühlelement.

Vorzugsweise umfasst eine erfindungsgemäße Vorrichtung (vorzugsweise eine vorzugbezeichnete Vorrichtung) zudem
(f) Mittel zum Überführen von Flüssigkeit aus der ersten Vorratseinheit in den Reaktor und/oder
(g) Mittel zum Überführen von Flüssigkeit aus der zweiten Vorratseinheit in den Reaktor.

Bereits weiter oben wurde ausgeführt, dass über die dort genannte Zuleitung Wasser in die erste Vorratseinheit transportiert wird, um dort den ersten Reaktanten vollständig oder teilweise zu lösen, damit dieser anschließend in den Reaktor überführt werden kann. Entsprechend umfasst eine erfindungsgemäße Vorrichtung somit vorzugsweise Mittel zum Überführen von Flüssigkeit aus der ersten Vorratseinheit in den Reaktor. In vielen Fällen ist es insoweit bevorzugt, wenn die Vorrichtung eine oder mehrere Rohrleitungen umfasst, über die die erste Vorratseinheit mit dem Reaktor verbunden ist. Eine solche Ausgestaltung ist lediglich bevorzugt, nicht jedoch unbedingt zum Erreichen der Zwecke der vorliegenden Erfindung erforderlich. Alternativ kann beispielsweise der Auslass der ersten Vorratseinheit so oberhalb des Reaktors angeordnet werden, dass austretende Flüssigkeit (in der Praxis also eine wässrige Lösung des soeben aufgelösten ersten Reaktanten) frei in den Reaktor hineinfällt.

Für die vorzugsweise vorgesehenen Mittel zum Überführen von Flüssigkeit aus der zweiten Vorratseinheit in den Reaktor gilt das vorstehend Gesagte entsprechend.

Vorzugsweise umfasst eine erfindungsgemäße Vorrichtung sowohl (f) Mittel zum Überführen von Flüssigkeit aus der ersten Vorratseinheit in den Reaktor als auch (g) Mittel zum Überführen von Flüssigkeit aus der zweiten Vorratseinheit in den Reaktor. Besonders bevorzugt ist es hierbei, wenn die jeweiligen Mittel jeweils eine oder mehrere Rohrleitungen umfassen.

Eine in der Praxis besonders bevorzugte, erfindungsgemäße Vorrichtung (vorzugsweise eine vorstehend als bevorzugt bezeichnete Vorrichtung) umfasst zudem
(h) einen Vorratsbehälter zur Aufnahme wässriger Chlordioxidlösung aus dem Reaktor, wobei der Vorratsbehälter vorzugsweise so unterhalb des Reaktors angeordnet ist, dass wässrige Chlordioxidlösung mittels Schwerkraft aus dem Reaktor in den Vorratsbehälter überführbar ist.

Vorzugsweise ist somit neben dem Reaktor selbst, in dem ja nach vollständiger Umsetzung der Reaktanten eine wässrige Chlordioxidlösung entstanden ist, ein separater Vorratsbehälter zur Aufnahme wässriger Chlordioxidlösung vorgesehen. Dies ermöglicht es dem Nutzer, einerseits aus dem Vorratsbehälter heraus wässrige Chlordioxidlösung dorthin zu transportieren, wo es für die jeweiligen Desinfektionsaufgaben benötigt wird und gleichzeitig frische wässrige Chlordioxid-Lösung im Reaktor herzustellen. Die bevorzugte Anordnung des Vorratsbehälters unterhalb des Reaktors ermöglicht die besonders einfache und sichere Überführung der wässrigen Chlordioxid-Lösung aus dem Reaktor in den Vorratsbehälter. Hierzu sind keine Pumpen oder dergleichen erforderlich, sodass neben verringerten Anschaffungskosten auch reduzierte Wartungskosten anfallen.

Der Vorratsbehälter besitzt vorzugsweise einen Innenraum, der etwas größer ist als der Innenraum des Reaktors. Dies erlaubt es, die gesamte im Reaktor erzeugte Menge an wässriger Chlordioxid-Lösung in den Vorratsbehälter zu überführen, sofern der Vorratsbehälter leer ist oder maximal mit einem (Reserve-)Bestand an Chlordioxid-Lösung gefüllt ist, der einerseits ausreicht, um noch für einen ausreichend langen Zeitraum Chlordioxid-Lösung zur Verfügung zu stellen, aber andererseits so gering bemessen ist, dass das verbleibende Innenvolumen des Vorratsbehälters die gesamte Menge an Chlordioxid-Lösung aus dem Reaktor aufnehmen kann.

Die erfindungsgemäße Vorrichtung ist vorzugsweise zur Durchführung des Peroxodisulfat-Chlorit-Verfahrens geeignet, wozu sie in vorteilhafter Weise so ausgestaltet ist, wie es vorstehend als bevorzugt bezeichnet ist.

Vorzugsweise ist der erste Reaktant in der ersten Vorratseinheit Peroxodisulfat und das Verhältnis aus der Stoffmenge an Peroxodisulfat in der ersten Vorratseinheit zum Volumen des Reaktors ist kleiner oder gleich 0,148 mol/L, besonders bevorzugt im Bereich von 0,00148 mmol/L bis 0,037 mol/L.

Alternativ ist der erste Reaktant in der ersten Vorratseinheit Chlorit und das Verhältnis aus der Stoffmenge an Chlorit in der ersten Vorratseinheit zum Volumen des Reaktors ist bevorzugt kleiner oder gleich 0,296 mol/L und besonders bevorzugt im Bereich von 0,00296 mmol/L bis 0,074 mol/L.

Die vorstehend genannten Verhältnisse aus der Stoffmenge an erstem Reaktanten zum Volumen des Reaktors sind in beiden alternativen Fällen so gewählt, dass die erste Vorratseinheit nicht mehr an erstem Reaktanten umfasst als zum Herstellen einer Maximalkonzentration von 20 g Chlordioxid/L Reaktorvolumen erforderlich ist. Der jeweils angegebene bevorzugte Wert für das besagte Verhältnis ist so gewählt, dass nicht mehr als 20 g Chlordioxid/L Reaktorvolumen erzeugt werden können. Der jeweils angegebene besonders bevorzugte Bereich für das Verhältnis aus der Stoffmenge an ersten Reaktanten zum Volumen des Reaktors ist jeweils so gewählt, dass die maximal resultierende Menge an Chlordioxid im Reaktor zwischen 0,2 mg/L und 5 g/L liegt. Der Wert von 20 g/L entspricht einem Wert, bei dem eine Explosionsgefahr des Reaktorinhalts unter Luftabschluss weitgehend ausgeschlossen ist. Der Wert von 0,2 mg/L entspricht der Maximalkonzentration von Chlordioxid im Trinkwasser gemäß Trinkwasserverordnung bzw. der erforderlichen Konzentration an Chlordioxid zur Abtötung von im Trinkwasser vorkommenden Keimen wie E.Coli, Pseudomonaden, Legionellen usw.

Vorzugsweise umfasst eine erfüllungsgemäße Vorrichtung, welche einen Vorratsbehälter umfasst, zudem
(i) eine Dosiereinrichtung zur dosierten Entnahme von wässriger Chlordioxid-Lösung aus dem Vorratsbehälter.

Die Dosiereinrichtung kann dabei so ausgestaltet sein, wie es aus dem Stand der Technik bekannt ist; die Dosiereinrichtung kann somit insbesondere als Dosierpumpe (z.B. Membrandosierpumpe) oder als peristaltische Pumpe oder als Proportionaldosierer oder als Wasserstrahlpumpe unter Ausnutzung des Venturi Effektes vorliegen.

Eine erfindungsgemäße Vorrichtung umfasst vorzugsweise zudem
(j) eine Einrichtung zum Beheizen und/oder Kühlen des Reaktors, wobei die Einrichtung vorzugsweise eine Steuer- oder Regeleinheit zur Einstellung und/oder zum Konstanthalten einer Soll-Temperatur umfasst.

Es versteht sich, dass die Reaktion zwischen dem ersten Reaktanten und dem zweiten Reaktanten zur Herstellung von Chlordioxid vorzugsweise in einem definierten Temperaturbereich stattfinden sollte, der dem Nutzer eine möglichst große Sicherheit gibt und insbesondere die Thermolyse des Chlordioxids zu anderen chloroxidischen Abbauprodukten oder auch ein Explodieren der Reaktionsmischung bzw. der Produktmischung verhindert. Je nach den Bedingungen des Einzelfalls ist insoweit der Reaktor zu beheizen und/oder zu kühlen. Eine besonders große Sicherheit ist gewährleistet, wenn die Reaktor-Innentemperatur mittels einer Steuer- oder Regeleinheit kontrolliert wird, welche vorzugsweise zur Einstellung und/oder zum Konstanthalten einer Soll-Temperatur aufgelegt ist.

Eine erfindungsgemäße Vorrichtung (vorzugsweise wie vorstehend als bevorzugt bezeichnet) umfasst zudem
(k) eine Sperrvorrichtung zum Verhindern oder Erschweren eines Übertritts von Flüssigkeiten und/oder Gasen aus dem Reaktor in die erste Vorratseinheit.

Es hat sich in eigenen Untersuchungen in manchen Fällen als nachteilig erwiesen, dass gasförmiges Chlordioxid oder flüssige Reaktionsmischung aus dem Reaktor in die erste Vorratseinheit gelangen konnte, entgegen der Richtung des Eintritts des gelösten ersten Reaktanten in den Reaktor. Eine Sperrvorrichtung kann dabei insbesondere als Siphon oder Rückschlagventil ausgestaltet sein; andere Ausgestaltungen sind möglich.

Es ist besonders vorteilhaft, eine erfindungsgemäße Vorrichtung weitgehend zu automatisieren und zum Zwecke der Automatisierung eine oder mehrere Steuer- und/oder Regelungseinheiten vorzuziehen. Bevorzugte erfindungsgemäße Vorrichtungen (insbesondere solche, wie sie vorstehend als bevorzugt bezeichnet sind), umfassen neben oben genannten Bestandteilen zudem
(I) eine Steuer- und Regelungseinheit zum Steuern- und/oder Regeln
- des Wasserzuflusses zur ersten Vorratseinheit
   und/oder
- der Einrichtung zum Erwärmen und/oder Kühlen von Wasser, die der besagten Zuleitung zum ersten Vorratseinheit zugeordnet ist
   und/oder
- der Einrichtung zum Beheizen und/oder Kühlen des Reaktors
   und/oder
- der Flüssigkeitsmenge, die aus der zweiten Vorratseinheit in den Reaktor zu überführen ist
   und/oder
- der Menge an wässriger Chlordioxidlösung, die aus dem Reaktor in den Vorratsbehälter zu überführen ist
   und/oder
- der Dosiereinrichtung zur dosierten Entnahme von wässriger Chlordioxidlösung aus dem Vorratsbehälter.

Besonders bevorzugt ist es natürlich, wenn die zusätzlich vorgesehene Steuer- und Regelungseinheit sämtliche der vorstehend genannten Steuer- bzw. Regelungsaufgaben übernimmt. Es kann aber im Einzelfall durchaus vorteilhaft sein, eine Steuer- und Regelungseinheit vorzusehen, die nur eine, zwei, drei, oder mehr der besagten Aufgaben übernimmt.

In der Praxis umfasst eine erfindungsgemäße Vorrichtung (wie vorstehend definiert, vorzugsweise wie vorstehend als bevorzugt bezeichnet) nicht nur den ersten Reaktanten in der ersten Vorratseinheit sondern auch den zweiten Reaktanten in der zweiten Vorratseinheit. In vielen Fällen ist es dabei vorteilhaft, wenn der zweite Reaktant in der zweiten Vorratseinheit in Form einer flüssigen Lösung vorliegt, bevorzugt in Form einer wässrigen Lösung. Beispielsweise ist es vorteilhaft, wenn der erste Reaktant in der ersten Vorratseinheit Peroxodisulfat in fester Form ist und der zweite Reaktant in der zweiten Vorratseinheit eine wässrige Chlorit-Lösung, sodass die erfindungsgemäße Vorrichtung in diesem Falle zur Durchführung des Peroxodisulfat-Chlorit-Verfahrens vorbereitet ist.

Alternativ ist es bevorzugt, wenn der erste Reaktant in der ersten Vorratseinheit Chlorit in fester Form ist und der zweite Reaktant in der zweiten Vorratseinheit eine wässrige Peroxodisulfat-Lösung.

Weiter alternativ ist es bevorzugt, wenn der erste Reaktant in der ersten Vorratseinheit Chlorit in fester Form ist und der zweite Reaktant in der zweiten Vorratseinheit Salzsäure oder eine andere Säure zur Durchführung des Chlorit-Säure-Verfahrens ist.

Weiter alternativ ist es bevorzugt, wenn der erste Reaktant in der ersten Vorratseinheit ein Chlorit/Hypochlorit Salzgemenge in fester Form ist und der zweite Reaktant in der zweiten Vorratseinheit Salzsäure oder eine andere Säure ist, insbesondere zur Durchführung des Chlorlösung : Chloritlösung Verfahrens.

Weiter alternativ ist es bevorzugt, wenn der erste Reaktant in der ersten Vorratseinheit ein Chlorit in fester Form ist und der zweite Reaktant in der zweiten Vorratseinheit Schwefelsäure oder eine andere Säure oder ein Hydrogensulfat oder ein anderes saures Salz in fester Form ist, insbesondere zur Durchführung des Natriumchlorit-Lösung Schwefelsäure-Verfahrens.

Alternativ hierzu ist es bevorzugt, wenn der erste Reaktant in der ersten Vorratseinheit ein Hydrogensulfat oder ein anderes saures Salz in fester Form ist und der zweite Reaktant in der zweiten Vorratseinheit eine wässrige Chlorit-Lösung oder ein festes Chlorit ist, insbesondere zur Durchführung des Natriumchlorit-Lösung Schwefelsäure-Verfahrens.

Weiter alternativ ist es bevorzugt, wenn der erste Reaktant in der ersten Vorratseinheit ein Peroxomonosulfat und/oder ein anderes Persulfat - auch als Redoxinitiator - in fester Form ist und der zweite Reaktant in der zweiten Vorratseinheit eine wässrige Chlorit-Lösung oder ein festes Chlorit ist, insbesondere zur Durchführung des Chlorit-Peroxodisulfat-Verfahrens gemäß DVGW Arbeitsblatt W224.

Vorzugsweise ist die zweite Vorratseinheit so oberhalb des Reaktors angeordnet, dass eine bzw. die wässrige Lösung des zweiten Reaktanten aus der zweiten Vorratseinheit mittels Schwerkraft in den Reaktor überführbar ist. Dies gilt vorzugsweise insbesondere dann, wenn die zweite Vorratseinheit den zweiten Reaktanten bereits umfasst, vorzugsweise in Form einer flüssigen Lösung, bevorzugt in Form einer wässrigen Lösung.

Es versteht sich, dass eine solche Ausgestaltung einer erfindungsgemäßen Vorrichtung, bei der die zweite Vorratseinheit so oberhalb des Reaktors angeordnet ist, dass wässrige Lösung des zweiten Reaktanten aus der zweiten Vorratseinheit mittels Schwerkraft in den Reaktor überführbar ist, insbesondere dann vorteilhaft ist, wenn zudem ein Vorratsbehälter zur Aufnahme wässriger Chlordioxid-Lösung aus dem Reaktor vorgesehen ist, der unterhalb des Reaktors angeordnet ist, sodass wässrige Chlordioxid-Lösung mittels Schwerkraft aus dem Reaktor in den Vorratsbehälter überführbar ist. Bei einer solchen Ausgestaltung kann der zweite Reaktant mittels Schwerkraft in den Reaktor gelangen und dort produzierte wässrige Chlordioxid-Lösung wiederum mittels Schwerkraft in den Vorratsbehälter. Für beide Transportschritte sind keine Pumpen oder dergleichen erforderlich.

In manchen Fällen ist es nützlich, die erfindungsgemäße Vorrichtung so auszugestalten, dass die zweite Vorratseinheit den zweiten Reaktanten bereits umfasst und einen Einlass für Wasser und einen davon getrennten Auslass besitzt, ganz ähnlich wie es weiter oben für die erste Vorratseinheit ausgeführt wurde. Die zweite Vorratseinheit ist in solchen Fällen vorzugsweise auswechselbar angeordnet und auch der zweite Reaktant in der zweiten Vorratseinheit liegt dann vorzugsweise als Feststoff vor. In solchen besonders bevorzugten Ausgestaltungen einer erfindungsgemäßen Vorrichtung liegen sowohl der erste als auch der zweite Reaktant als Feststoff vor, jeder der beiden Reaktanten ist in einer ersten bzw. zweiten Vorratseinheit bereitgestellt und sowohl die erste Vorratseinheit als auch die zweite Vorratseinheit sind auswechselbar angeordnet. Eine solche Ausgestaltung ist insbesondere in einer Vorrichtung vorteilhaft, die zur Durchführung des Peroxodisulfat-Chlorit-Verfahrens vorgesehen ist; eine solche Vorrichtung umfasst vorzugsweise sowohl die Peroxodisulfat-Komponente in fester Form als auch die Chlorit-Komponente in fester Form, wobei jede der beiden Komponenten in einer (ersten bzw. zweiten) Vorratseinheit bereit gestellt sind. Für die zweite Vorratseinheit gelten in derartigen Fällen sämtliche Anmerkungen zu bevorzugten Ausgestaltungen der ersten Vorratseinheit entsprechend. Insbesondere gelten sämtliche Anmerkungen entsprechend, welche die Verbindung der ersten Vorratseinheit mit einem Wasservorrat und mit dem Reaktor betreffen. Auf die obigen Ausführungen wird deshalb verwiesen.

Besonders bevorzugte erfindungsgemäße Vorrichtungen umfassen ein erstes Magazin zur Aufnahme von einer, zwei oder mehr Wechsel-Vorratseinheiten für die erste Vorratseinheit.

Die erfindungsgemäße Vorrichtung umfasst eine erste Vorratseinheit, welche auswechselbar angeordnet ist und einen ersten Reaktanten umfasst. Diese erste Vorratseinheit wird im Betrieb in der Regel so von Wasser durchspült, dass der erste Reaktant vollständig oder teilweise in Lösung geht und komplett aus der ersten Vorratseinheit entfernt wird. Die entsprechende Lösung oder Mischung wird in den Reaktor transportiert, wo die Reaktion zur Bildung von Chlordioxid stattfindet. Zu diesem Zeitpunkt kann bereits die erste Vorratseinheit gegen eine Wechsel-Vorratseinheit ausgetauscht werden. Die inzwischen entleerte erste Vorratseinheit wird der Vorrichtung entnommen und eine frische, mit unverbrauchtem ersten Reaktanten befüllte Vorratseinheit an deren Stelle in die Vorrichtung eingesetzt. Die einzusetzende Wechsel-Vorratseinheit kann den Nutzer bei entsprechender Ausgestaltung der erfindungsgemäßen Vorrichtung einem entsprechenden Magazin entnehmen, welches zumindest eine, vorzugsweise aber zwei oder mehr Wechsel-Vorratseinheiten umfasst. Die erste Vorratseinheit ist vorzugsweise zuleitungs- und/oder ableitungsseitig mit Rohrschnellverschlüssen ausgestattet, die ein schnelles Auswechseln und eine flüssigkeitsdichte Verbindung mit Zuleitung bzw. Ableitung ermöglichen.

Die vorstehenden Ausführungen betreffen die erste Vorratseinheit, gelten aber entsprechend für die zweite Vorratseinheit. Besonders bevorzugt ist somit das Vorhandensein eines zweiten Magazins zur Aufnahme von einer, zwei oder mehr Wechsel-Vorratseinheiten für die zweite Vorratseinheit, die ja in bevorzugten Ausgestaltungen der erfindungsgemäßen Vorrichtung vorgesehen ist.

Oben wurde bereits darauf hingewiesen, dass die vorliegende Erfindung nicht lediglich eine erfindungsgemäße Vorrichtung betrifft, sondern auch eine erfindungsgemäße auswechselbare Vorratseinheit für eine solche Vorrichtung. Die vorstehenden Ausführungen zu bevorzugten erfindungsgemäßen Vorrichtungen gelten entsprechend auch für die erfindungsgemäße auswechselbare Vorratseinheit. Insbesondere sind erfindungsgemäße auswechselbare Vorratseinheiten bevorzugt, wobei der erste Reaktant ausgewählt ist aus der Gruppe bestehend aus Peroxodisulfat und Chlorit. Auf die entsprechenden obigen Ausführungen sei verwiesen.

Die erfindungsgemäße auswechselbare Vorratseinheit definiert einen Innenraum, der den ersten Reaktanten aufnimmt und besitzt einen Einlass für Wasser und einen davon getrennten Auslass. Diese Maßgaben legen die Form der erfindungsgemäßen auswechselbaren Vorratseinheit weitgehend, aber nicht abschließend fest. Bevorzugt ist eine Ausgestaltung der erfindungsgemäßen auswechselbaren Vorratseinheit, wobei der erste Reaktant in einem zylindrischen Gehäuse angeordnet ist, vorzugsweise in einem zylindrischen Gehäuse aus Kunststoff, bevorzugt aus transparentem Kunststoff. Kunststoff ist gegenüber den zur Herstellung von Chlordioxid üblicherweise eingesetzten festen Reaktanten regelmäßig inert, so dass Gesundheitsrisiken weitgehend ausgeschlossen werden können.

Soweit eine erfindungsgemäße auswechselbare Vorratseinheit nicht bereits in eine erfindungsgemäße Vorrichtung integriert ist, ist sie erfindungsgemäß insgesamt, alternativ zumindest ihr den ersten Reaktanten umfassender Innenraum, luft- und/oder feuchtigkeitsdicht abgeschlossen und die auswechselbare Vorratseinheit ist zuleitungs- und/ oder ableitungsseitig mit Rohrschnellverschlüssen ausgestattet und/oder der Einlass (15) ist mittels eines Schnellverschlusses mit einer Zuleitung (9) flüssigkeitsdicht verbindbar. Vorzugsweise wird eine erfindungsgemäße auswechselbare Vorratseinheit als Wechsel-Vorratseinheit bereitgestellt, wobei die Vorratseinheit (als Element eines mehrere Wechsel-Vorratseinheiten umfassenden Magazins oder als einzelne Wechsel-Vorratseinheit) luft- und feuchtigkeitsdicht eingeschlossen ist, beispielsweise mittels einer üblichen evakuierten und verschweißten Folie.

Die vorliegende Erfindung betrifft auch ein Kit (Satz von Elementen) umfassend und bestehend aus einer, zwei oder mehr erfindungsgemäßen auswechselbaren ersten Vorratseinheiten umfassen einen ersten Reaktanten zur Herstellung von Chlordioxid sowie zusätzlich
(i) einer, zwei oder mehr zweiten Vorratseinheiten umfassend einen zweiten Reaktanten zur Herstellung von Chlordioxid
   und/oder
(ii) einem Magazin zur Aufnahme der ein, zwei oder mehr auswechselbaren ersten Vorratseinheiten.

Ein bevorzugtes Kit ist zur Durchführung des Peroxodisulfat-Chlorit-Verfahrens in einer erfindungsgemäßen Vorrichtung vorgesehen und umfasst ein, zwei oder mehr auswechselbare erste Vorratseinheiten umfassend Peroxodisulfat als ersten Reaktanten zur Herstellung von Chlordioxid sowie zusätzlich ein, zwei oder mehr zweite Vorratseinheiten umfassend Chlorit als zweiten Reaktanten zur Herstellung von Chlordioxid.

Ein weiteres besonders bevorzugtes Kit umfasst eine, zwei oder mehr auswechselbare erste Vorratseinheiten umfassend Peroxodisulfat oder Chlorit als ersten Reaktanten zur Herstellung von Chlordioxid sowie zusätzlich ein Magazin zur Aufnahme der besagten ein, zwei oder mehr auswechselbaren ersten Vorratseinheiten (jeweils umfassend Peroxodisulfat bzw. Chlorit).

Ganz besonders bevorzugt ist zur Durchführung des Peroxodisulfat-Chlorit-Verfahrens ein Kit, welches zwei Magazine umfasst, wobei das erste Magazin zwei oder mehr auswechselbare erste Vorratseinheiten umfassend Peroxodisulfat als ersten Reaktanten und wobei das zweite Magazin zwei oder mehr zweite Vorratseinheiten umfassend Chlorit umfasst.

Bevorzugte Ausgestaltungen eines erfindungsgemäßen Kits ergeben sich bei Einsatz bevorzugter erfindungsgemäßer auswechselbarer Vorratseinheiten wie weiter oben definiert. Es gelten die jeweiligen Ausführungen entsprechend.

Die vorliegende Erfindung betrifft auch ein Verfahren zur Herstellung einer Chlordioxid enthaltenden, unmittelbar zur Wasseraufbereitung einsetzbaren Lösung, wie in den beigefügten Ansprüchen definiert.

Offenbart wird auch ein Verfahren zur Herstellung einer Chlordioxid enthaltenden, unmittelbar zur Wasseraufbereitung einsetzbaren Lösung, mit folgenden Schritten:
Herstellen eines wässrigen Reaktionsgemisches enthaltend Chlorit und Peroxodisulfat in einem Reaktor,
wobei zum Herstellen des Reaktionsgemisches in dem Reaktor eine erfindungsgemäße auswechselbare Vorratseinheit umfassend eine Menge eines ersten Reaktanten ausgewählt aus der Gruppe bestehend aus Chlorit und Peroxodisulfat, wobei der erste Reaktant als Feststoff vorliegt, so mit Wasser durchspült wird, dass eine wässrige Lösung des ersten Reaktanten resultiert, welche in den Reaktor eingeleitet wird.

Es versteht sich, dass das erfindungsgemäße Verfahren vorzugsweise in einer erfindungsgemäßen Vorrichtung durchgeführt wird.

Vorzugsweise wird in einem erfindungsgemäßen Verfahren die auswechselbare Vorratseinheit umfassend den ersten Reaktanten so mit Wasser durchspült, dass eine wässrige Lösung der Gesamtmenge des ersten Reaktanten resultiert, welche in den Reaktor eingeleitet wird.

Bevorzugte erfindungsgemäße Verfahren ergeben sich bei Einsatz von bevorzugten auswechselbaren Vorratseinheiten wie weiter oben definiert. Es gelten die jeweiligen Ausführungen entsprechend. Bevorzugte erfindungsgemäße Verfahren ergeben sich auch bei Einsatz von bevorzugten erfindungsgemäßen Vorrichtungen wie oben definiert. Insoweit gelten die jeweiligen obigen Ausführungen entsprechend.

### Figurenbeschreibung:

Die Erfindung wird nachfolgend unter Bezugnahme auf die beigefügten Figuren näher erläutert. Es stellen dar:
- Fig. 1: schematische Zeichnung einer erfindungsgemäßen Vorrichtung (Anlage) zur Herstellung wässriger Chlordioxidlösungen;
- Fig. 2: schematische Abbildung einer ersten Vorratseinheit zur Verwendung als Bestandteil einer erfindungsgemäßen Vorrichtung (wie in Fig. 1 und den nachfolgenden Figuren dargestellt) und zur Verwendung in einem erfindungsgemäßen Verfahren;
- Fig. 3: schematische Abbildung einer erfindungsgemäßen Vorrichtung, die weitgehend, aber nicht vollständig, der aus Fig. 1 entspricht;
- Fig. 4: schematische Abbildung einer erfindungsgemäßen Vorrichtung, welche sich von der Vorrichtung gemäß Fig. 1 lediglich in Anordnung und Ausgestaltung der zweiten Vorratseinheit sowie der Mittel zum Überführen von Flüssigkeit aus der zweiten Vorratseinheit in den Reaktor unterscheidet;
- Fig. 5: schematische Zeichnung einer speziellen Ausgestaltung einer erfindungsgemäßen Vorrichtung (Anlage) gemäß Fig.1 zur Herstellung wässriger Chlordioxidlösungen.

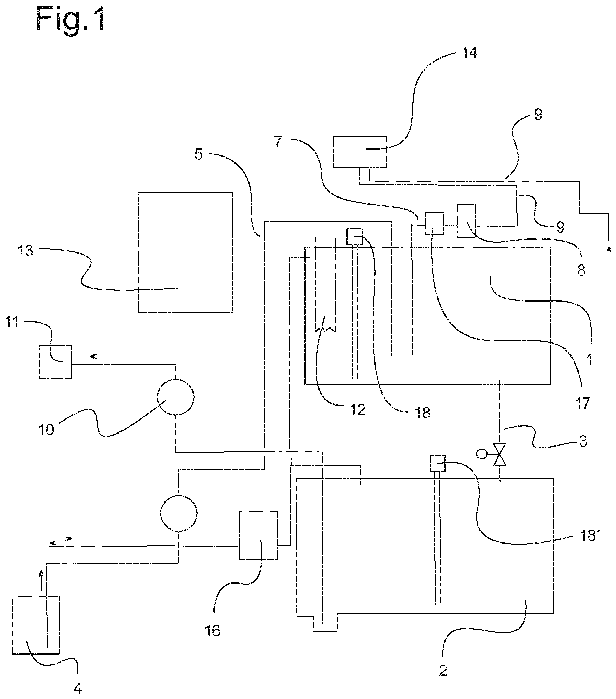

Die in Figur 1 schematisch dargestellte Vorrichtung (Anlage) umfasst einen Reaktor **1,** in dem ein Reaktionsgemisch zu einer wässrigen Chlordioxid-Lösung umgesetzt werden soll. Die Vorrichtung umfasst zudem einen Vorratsbehälter **2** zur Aufnahme wässriger Chlordioxid-Lösung aus dem Reaktor **1.** Der Vorratsbehälter **2** ist in der Ausgestaltung gemäß Figur 1 unterhalb des Reaktors **1** angeordnet, so dass wässrige Chlordioxid-Lösung (als Produkt der im Reaktor **1** durchgeführten Reaktion) mittels Schwerkraft aus dem Reaktor **1** in den Vorratsbehälter **2** überführbar ist. In der Ausgestaltung gemäß Figur 1 ist zu diesem Zwecke eine Leitung **3** mit Ventilsteuerung vorgesehen.

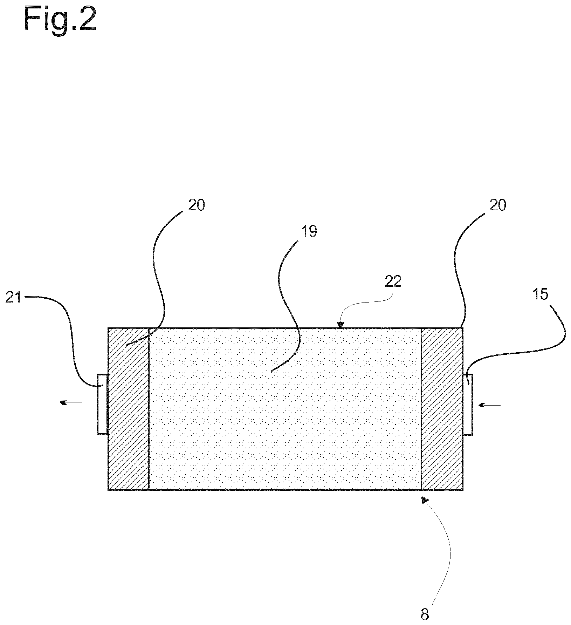

Der Reaktor **1** ist zudem mit einer ersten Vorratseinheit **8** verbunden, bei der im Ruhezustand der Vorrichtung festes Peroxodisulfat vorliegt (als Beispiel für einen ersten Reaktanten; alternativ kann auch eine andere Substanz in der ersten Vorratseinheit bevorratet werden, die zur Herstellung von Chlordioxid geeignet ist). Die Vorratseinheit **8** ist über eine Leitung **7** mit dem Reaktor **1** so verbunden, dass Flüssigkeit aus der Vorratseinheit **8** in den Reaktor **1** überführt werden kann. Die Vorratseinheit **8** umfasst einen Einlass für Wasser (vgl. hierzu Figur 2, Bezugszeichen **15)** und einen davon getrennten (der Leitung **7** zugeordneten) Auslass (vgl. hierzu Figur 2, Bezugszeichen **21).** Die Vorratseinheit **8** umfasst Natriumperoxodisulfat in fester Form. Leitung **7** ist als Rohrleitung ausgebildet und ist ein Beispiel für ein erfindungsgemäß vorzugsweise vorgesehenes Mittel zum Überführen von Flüssigkeit aus der ersten Vorratseinheit **8** in den Reaktor **1.**

Der Einlass der Vorratseinheit **8** ist über eine Zuleitung **9** mit einem öffentlichen Wassernetz verbunden, welches als Wasservorrat dient. Die Vorratseinheit **8** ist zwischen der Zuleitung **9** und der zum Ableiten von Flüssigkeit vorgesehenen Leitung **7** auswechselbar angeordnet, wobei der Einlass flüssigkeitsdicht mit der Zuleitung **9** verbunden ist, so dass eine sichere Verbindung der ersten Vorratseinheit **8** mit dem Wasservorrat gewährleistet ist (dem Wassernetz; das Wassernetz sollte hinsichtlich der chemischen Parameter Wasser in Trinkwasserqualität zur Verfügung stellen, vgl. hinsichtlich der chemischen Parameter insoweit die Trinkwasserverordnung - TrinkwV 2001 sowie die Liste der Aufbereitungsstoffe und Desinfektionsverfahren gemäß § 11 Trinkwasserverordnung 2001 (16. Änderung; Stand: November 2011)). Die auswechselbare Vorratseinheit **8** umfasst ein Gehäuse, in dem der erste Reaktant (im Beispiel: Peroxodisulfat) angeordnet ist. Das Gehäuse ist vorzugsweise zylindrisch, wobei ein solches zylindrisches Gehäuse vorzugsweise so angeordnet ist, dass im Betrieb Wasser aus der Zuleitung **9** durch den Einlass in das zylindrische Gehäuse eindringt, dort das Peroxodisulfat auflöst oder zumindest suspendiert und die resultierende wässrige Lösung bzw. Dispersion durch den Auslass in Richtung Reaktor **1** strömt. Die Strömungsrichtung verläuft dabei vorzugsweise entlang der Längsachse des zylindrischen Gehäuses, wodurch weitgehend sichergestellt wird, dass keine Restmengen an Peroxodisulfat im Gehäuse verbleiben. Das zylindrische Gehäuse ist vorzugsweise aus Kunststoff gefertigt, wobei der Kunststoff gegenüber Peroxodisulfat inert ist. Das zylindrische Gehäuse ist vorzugsweise aus transparentem Kunststoff gefertigt, so dass der Nutzer durch die Gehäuseaußenwandung hindurch das Gehäuseinnere und die darin stattfindenden Prozesse beobachten kann.

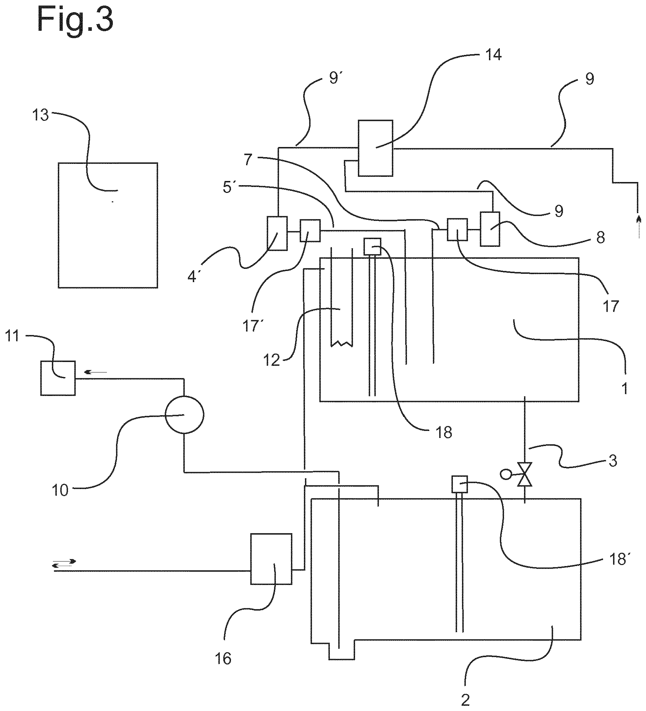

Mit dem Reaktor **1** verbunden ist zudem eine zweite Vorratseinheit **4,** welche in der Ausgestaltung gemäß Figur 1 eine Chlorit-Lösung bevorratet, aber gemäß den allgemeinen Ausführungen zur vorliegenden Erfindung auch mit einem anderen Reaktanten gefüllt sein könnte. Die besagte Chlorit-Lösung ist aus der zweiten Vorratseinheit **4** (im Beispiel also dem Chlorit-Vorratsbehälter) über eine Leitung **5** mit Pumpe so in den Reaktor **1** überführbar, dass lediglich eine definierte Menge der Chlorit-Lösung in den Reaktor **1** gelangt. Die Leitung **5** ist ein Beispiel für ein erfindungsgemäß bevorzugtes Mittel zum Überführen von Flüssigkeit aus der zweiten Vorratseinheit **4** in den Reaktor **1.** Sofern die zweite Vorratseinheit **4** in geeigneter Weise angeordnet wird, kann auf den Einsatz einer Pumpe in der Leitung **5** alternativ verzichtet werden; es genügt dann in vielen Fällen das Vorsehen eines Ventils oder dergleichen (vgl. hierzu auch die Beschreibung zu Figur 3, 4 und 5).

Der Vorratsbehälter **2** ist mit einer Dosiereinrichtung **10** zur dosierten Entnahme von wässriger Chlordioxid-Lösung aus dem Vorratsbehälter **2** verknüpft; die Dosiereinrichtung **10** ist vorzugsweise eine Pumpe wie z.B. eine Schlauchpumpe. Über die Dosiereinrichtung **10** ist der Vorratsbehälter **2** mit einem nicht weiter dargestellten System **11** verbunden, welches einer Desinfektion mit einer wässrigen Chlordioxid-Lösung bedarf.

Der Vorratsbehälter **2** besitzt einen Innenraum, der etwas größer ist als der Innenraum des Reaktors **1.** Dies erlaubt es, die gesamte im Reaktor **1** erzeugte Menge an wässriger Chlordioxid-Lösung in den Vorratsbehälter **2** zu überführen, sofern der Vorratsbehälter **2** leer ist oder maximal mit einem (Reserve-)Bestand an Chlordioxid-Lösung gefüllt ist, der einerseits ausreicht, um noch für einen ausreichend langen Zeitraum Chlordioxid-Lösung zur Verfügung zu stellen, aber andererseits so gering bemessen ist, dass das verbleibende Innenvolumen des Vorratsbehälters **2** die gesamte Menge an Chlordioxid-Lösung aus dem Reaktor **1** aufnehmen kann.

Die in Figur 1 dargestellte Vorrichtung umfasst zudem ein Be- und Entlüftungssystem **16** für den Vorratsbehälter **2** und den Reaktor **1.** Dieses Be- und Entlüftungssystem **16** umfasst Aktivkohlefilter oder ähnlich ausgestattete Filtereinheiten sowie Leitungen zu Vorratsbehälter **2** und Reaktor **1.**

Der Reaktor **1** ist mit einer thermostatisierbaren Heizung **12** ausgestattet, welche im Betrieb die Einstellung einer konstanten Temperatur von zum Beispiel 30°C im Reaktionsgemisch ermöglicht. Die thermostatisierbare Heizung **12** ist ein Beispiel für eine erfindungsgemäß bevorzugte Einrichtung zum Beheizen und/oder Kühlen des Reaktors **1.** Die thermostatisierbare Heizung **12** umfasst oder ist verknüpft mit einer Steuer- oder Regeleinheit **13** zur Einstellung und/oder zum Konstanthalten einer Soll-Temperatur.

Der Zuleitung **9** ist in der Ausgestaltung gemäß Figur 1 eine Einrichtung **14** zum Erwärmen und/oder Kühlen von Wasser so zugeordnet, dass Wasser, welches aus dem Wassernetz durch die Leitung **9** hindurch der ersten Vorratseinheit **8** zugeführt werden soll, in der Einrichtung **14** erwärmt oder gekühlt werden kann, so dass es die erste Vorratseinheit **8** mit einer bestimmten vorgegebenen Temperatur erreicht. Wasser wird somit im Betrieb über die Zuleitung **9** der Einrichtung **14** zugeführt, dort temperiert (erwärmt oder gekühlt) und dann über die fortgesetzte Leitung **9** in die erste Vorratseinheit **8** transportiert.

Die in Figur 1 dargestellte Vorrichtung (Anlage) umfasst zudem eine nicht im Detail dargestellte Steuer- und Regeleinrichtung **13** zum Steuern und/oder Regeln relevanter Funktionen der Vorrichtung (Anlage). Im Beispiel gemäß Figur 1 dient die Steuer- und Regelungseinheit **13** zum Steuern und/oder Regeln des Wasserzuflusses zur ersten Vorratseinheit **8,** zum Steuern und/oder Regeln der Einrichtung **14** zum Erwärmen und/oder Kühlen von Wasser, die der Zuleitung **9** zugeordnet ist, zum Steuern und/oder Regeln der thermostatisierbaren Heizung **12** (als Beispiel einer Einrichtung zum Beheizen und/oder Kühlen des Reaktors **1),** zum Steuern und/oder Regeln der Flüssigkeitsmenge, die aus der zweiten Vorratseinheit **4** in den Reaktor **1** zu überführen ist, zum Steuern und/oder Regeln der Menge an wässriger Chlordioxid-Lösung, die aus dem Reaktor **1** in den Vorratsbehälter **2** zu überführen ist, zum Steuern und/oder Regeln der Dosiereinrichtung **10** zur dosierten Entnahme von wässriger Chlordioxid-Lösung aus dem Vorratsbehälter **2.**

Die Vorrichtung (Anlage) gemäß Figur 1 umfasst zudem eine Sperrvorrichtung 17 zum Verhindern oder Erschweren eines Übertritts von Flüssigkeiten und/oder Gasen aus dem Reaktor **1** in die erste Vorratseinheit **8.** Die Sperrvorrichtung **17** ist dabei beispielsweise als Siphon oder Rückschlagventil ausgebildet. Im Betrieb der Vorrichtung (Anlage) gemäß Figur 1 sind die erste Vorratseinheit **8** und die zweite Vorratseinheit **4** mit dem jeweiligen Reaktanten gefüllt. Dabei wird das Verhältnis aus der Stoffmenge an erstem Reaktanten in der ersten Vorratseinheit zum Volumen des Reaktors so gewählt, dass eine Explosionsgefahr bei sachgemäßem Betrieb der Vorrichtung (Anlage) ausgeschlossen ist und eine unmittelbar zur Wasseraufbereitung einsetzbare Chlordioxid-Lösung erreichbar ist. Zu bevorzugten Verhältnissen der Stoffmenge an Peroxodisulfat als erstem Reaktanten in der ersten Vorratseinheit **8** zum Volumen des Reaktors **1** siehe oben.

Reaktor **1** und/oder Vorratsbehälter **2** umfassen in bevorzugten Ausgestaltungen eine Füllstandsmessvorrichtung **18** bzw. **18',** die mit der Steuer- und Regelungseinheit **13** zusammenwirken und gewährleisten, dass keine zu niedrigen oder zu hohen Füllstände in Reaktor **1** und/oder Vorratsbehälter 2 vorliegen.

Zur Herstellung einer wässrigen Chlordioxid-Lösung nach dem Peroxodisulfat-Chlorit-System wird nun vorzugsweise wie folgt vorgegangen:
Eine definierte Menge an Chlorit-Lösung (z.B. 2 Liter), wird aus der zweiten Vorratseinheit **4** über die Rohrleitung **5** in den Reaktor **1** befördert. Wasser (z.B. 18 Liter) wird anschließend durch die Leitung **9** hindurch in die erste Vorratseinheit **8** transportiert (wobei das Wasser mittels der Einrichtung **14** auf eine Soll-Temperatur von 30°C erwärmt wurde). Das Wasser fließt durch das zylindrische Gehäuse der ersten Vorratseinheit **8** hindurch und löst dabei das im Gehäuse enthaltene Salz (beispielsweise eine Mischung von 134,2 g Natriumperoxodisulfat (Na₂S₂O₈) und 40 g Natriumhydrogensulfat (NaHSO₄)) vollständig auf. Die erste Vorratseinheit ist zu diesem Zwecke so ausgestaltet, dass es in ihr zu einer turbulenten Strömung (Reynolds-Zahl > 3.600) kommt. Die resultierende Lösung wird über die Leitung **7** in den Reaktor **1** eingeleitet und dort mit der vorgelegten Chlorit-Lösung vermischt. Der Einlauf der Lösung in den Reaktor **1** ist hierbei vorzugsweise tangential ausgelegt, so dass es zu einer optimalen Vermischung und damit zu einer Ausbildung eines homogenen wässrigen Reaktionsgemisches kommt. Die Reaktorinnentemperatur wird auf eine Reaktionstemperatur im Bereich von 20°C-40°C eingestellt, vorzugsweise auf eine Temperatur von ca. 30°C, mittels der gesteuerten bzw. geregelten bzw. thermostatisierbaren Heizung **12.** Die Steuerung der Heizung **12** erfolgt durch die Steuer- und Regelungseinheit **13.** Im Reaktor **1** findet dann die Reaktion zur Bildung von Chlordioxid aus Peroxodisulfat und Chlorit statt. Die Reaktionsbedingungen werden beispielsweise so eingestellt, wie es in der Patentschrift EP 822920 B1 offenbart ist. Die Reaktionsdauer beträgt beispielsweise 24 Stunden.

Nach Beendigung der Reaktion liegt eine Chlordioxid enthaltende, zur Wasseraufbereitung einsetzbare Lösung (z.B. 20 Liter) vor. Diese Lösung wird aus dem Reaktor **1** heraus durch die Leitung **3** in den Vorratsbehälter **2** überführt, wozu das in der Leitung **3** vorgesehene Ventil betätigt wird. Aus dem Vorratsbehälter **2** heraus wird die hergestellte wässrige Chlordioxid-Lösung mittels der Dosiereinrichtung **10** dem in Figur 1 nicht im Detail dargestellten System **11** zugeführt, welches einer Behandlung mit Chlordioxid bedarf.

In dem geschilderten Verfahren steuert und/oder regelt die Steuer- und Regelungseinheit **13** den Wasserzufluss zur ersten Vorratseinheit **8** (aus dem Wassernetz durch die Leitung **9** hindurch) sowie das Steuern und/oder Regeln der Einrichtung **14,** die der Zuleitung **9** zugeordnet ist, sowie das Steuern und/oder Regeln der thermostatisierbaren Heizung **12** zum Beheizen und/oder Kühlen des Reaktors **1** sowie die Dosierung der Menge an Chlorit-Lösung, die aus der zweiten Vorratseinheit **4** in den Reaktor **1** überführt wird sowie das Steuern und/oder Regeln der Menge an wässriger Chlordioxid-Lösung, die aus dem Reaktor **1** (nach Betätigung des Ventils in der Leitung **3)** in den Vorratsbehälter **2** überführt wird sowie das Steuern und/oder Regeln der Dosiereinrichtung **10** zur dosierten Entnahme von wässriger Chlordioxid-Lösung aus dem Vorratsbehälter **2** und zum Zuführen dieser wässrigen Chlordioxid-Lösung zum System **11.**

Nachdem die anfänglich in der ersten Vorratseinheit **8** bevorratete Menge an erstem Reaktanten (im Beispiel: Peroxodisulfat-Salz) vollständig aus der ersten Vorratseinheit **8** herausgespült wurde, wird die erste Vorratseinheit **8** ersetzt. Hierzu wird die flüssigkeitsdichte Verbindung zwischen der ersten Vorratseinheit **8** und der zulaufseitig angeordneten Zuleitung **9** ebenso gelöst wie die flüssigkeitsdichte Verbindung zur ablaufseitig angeordneten Leitung **7.** Die erste Vorratseinheit **8** ist vorzugsweise mit Rohrschnellverschlüssen ausgestattet, vgl. hierzu die Ausführungen weiter oben. An die Stelle der verbrauchten ersten Vorratseinheit **8** tritt eine frische (Wechsel-)Vorratseinheit, welche eine Menge an Peroxodisulfat enthält, wie sie in einer folgenden Umsetzung benötigt wird. Üblicherweise sind die eingesetzten Stoffmengen an Peroxodisulfat in (Wechsel-)Vorratseinheiten jeweils identisch. Die (Wechsel-)Vorratseinheit wird mittels der besagten Schnellverschlüsse mit der Zuleitung **9** und der Leitung **7** flüssigkeitsdicht verbunden und steht dann für eine nachfolgende Chlordioxid-Herstellung zur Verfügung.

In besonders bevorzugten Ausgestaltungen wird ein erstes Magazin zur Verfügung gestellt, welches zwei oder mehr Wechsel-Vorratseinheiten für die erste Vorratseinheit 8 aufnimmt.

Figur 2 ist eine schematische Abbildung einer ersten Vorratseinheit **8** zur Verwendung als Bestandteil einer erfindungsgemäßen Vorrichtung (wie in Figur 1 und den nachfolgenden Figuren dargestellt) und zur Verwendung in einem erfindungsgemäßen Verfahren.

Die erste Vorratseinheit **8** umfasst einen Einlass **15** für Wasser, der mittels eines nicht im Detail dargestellten Schnellverschlusses mit der Zuleitung **9** gemäß Figur 1 flüssigkeitsdicht verbindbar ist. Zudem umfasst die erste Vorratseinheit **8** einen Auslass **21,** der mittels eines nicht im Detail dargestellten Schnellverschlusses mit der Leitung **7** gemäß Figur 1 flüssigkeitsdicht verbindbar ist. Die erste Vorratseinheit **8** umfasst ein zylindrisches Gehäuse **22,** welches einen Gehäuseinnenraum **19** definiert, innerhalb dessen sich ein erster Reaktant (in der Ausgestaltung gemäß Figur 1: Peroxodisulfat im Gemisch mit Natriumhydrogensulfat) befindet. Gegen einen voreiligen Austritt von erstem Reaktanten durch Einlass **15** bzw. Auslass **21** sind jeweils Rückhaltemittel **20** angeordnet, wobei es sich in der Praxis um räumlich fixierte Wattefilter oder dergleichen handeln kann. Das zylindrische Gehäuse **22** ist aus transparentem Kunststoff gefertigt, wobei der Kunststoff gegenüber Peroxodisulfat inert ist; der Nutzer kann durch die Gehäuseaußenwandung hindurch das Gehäuseinnere und die darin stattfindenden Prozesse beobachten.

Figur 3 zeigt eine erfindungsgemäße Vorrichtung, die weitgehend, aber nicht vollständig, der aus Figur 1 entspricht. Elemente der Vorrichtung gemäß Figur 3, die Elementen aus der Vorrichtung gemäß Figur 1 technisch unverändert entsprechen, sind mit identischen Bezugszeichen bezeichnet. Elemente der Vorrichtung gemäß Figur 3, die Elementen aus der Vorrichtung Figur 1 funktional entsprechen, ohne identisch zu sein, sind durch gleiche Bezugszeichen identifiziert, denen ein hochgestellter Strich zugeordnet ist.

Die Vorrichtung gemäß Figur 3 umfasst einen Reaktor **1** und eine erste Vorratseinheit **8,** deren Anordnung und deren Verbindung miteinander identisch sind im Vergleich mit Figur 1. Gleiches gilt für die Anordnung des Vorratsbehälters **2.**

Im Unterschied zu Figur 1 umfasst die Vorrichtung gemäß Figur 3 jedoch eine zweite Vorratseinheit **4',** welche entsprechend der ersten Vorratseinheit **8** aufgebaut und angeordnet ist. Die zweite Vorratseinheit **4'** umfasst somit den zweiten Reaktanten und besitzt einen Einlass für Wasser und einen davon getrennten Auslass, wobei die zweite Vorratseinheit **4'** auswechselbar angeordnet ist. Vorzugsweise liegt der zweite Reaktant in der zweiten Vorratseinheit **4'** als Feststoff vor. Soweit also (analog zur Ausgestaltung gemäß Figur 1) die erste Vorratseinheit **8** den ersten Reaktanten Peroxodisulfat (im Gemisch seines Natriumsalzes mit Natriumhydrogensulfat) umfasst, umfasst die zweite Vorratseinheit **4'** gemäß Figur 3 den zweiten Reaktanten Chlorit, vorzugsweise in fester Form, d. h. als Salz. Üblich ist der Einsatz als Natriumsalz. Die zweite Vorratseinheit **4'** ist über eine Leitung **5'** mit dem Reaktor **1** verbunden und über eine Leitung **9'** mit dem Wasservorrat (Wassernetz) verbunden, wobei die Leitung **9'** mittels der Einrichtung **14** erwärmt und/oder gekühlt werden kann, welche bereits für das Erwärmen und/oder Kühlen der Leitung **9** zuständig ist. Alternativ kann eine separate (zweite) Einrichtung zum Erwärmen und/oder Kühlen vorgesehen sein, die ausschließlich der Leitung **9'** zugeordnet ist. Wasservorratsseitig ist die Leitung **9'** mit der Leitung **9** vereinigt.

Zwischen der zweiten Vorratseinheit **4'** und dem Reaktor **1** ist die Leitung **5'** mittels einer zweiten Sperrvorrichtung **17'** geschützt, die zum Verhindern oder Erschweren eines Übertritts von Flüssigkeiten und/oder Gasen aus dem Reaktor **1** in die zweite Vorratseinheit **4'** vorgesehen ist.

Im Betrieb der Vorrichtung gemäß Figur 3 wird analog zur Vorgehensweise gemäß Figur 1 vorgegangen, wobei jedoch natürlich gemäß den apparativen Unterschieden der jeweiligen Vorrichtungen auch der zweite Reaktant aus seiner zweiten Vorratseinheit **4'** herausgespült wird. Hinsichtlich des Spülvorganges sei auf die entsprechenden Ausführungen zu Figur 1 (dort betreffend das Ausspülen aus der ersten Vorratseinheit **8)** verwiesen; Die Ausführungen gelten entsprechend. Die Reihenfolge der Spülschritte kann dabei frei gewählt werden, wobei es jedoch weiterhin bevorzugt ist, zunächst eine Chlorit-Lösung herzustellen und in den Reaktor **1** einzuspülen und erst danach eine Peroxodisulfat-Lösung im Reaktor **1** hinzuzufügen.

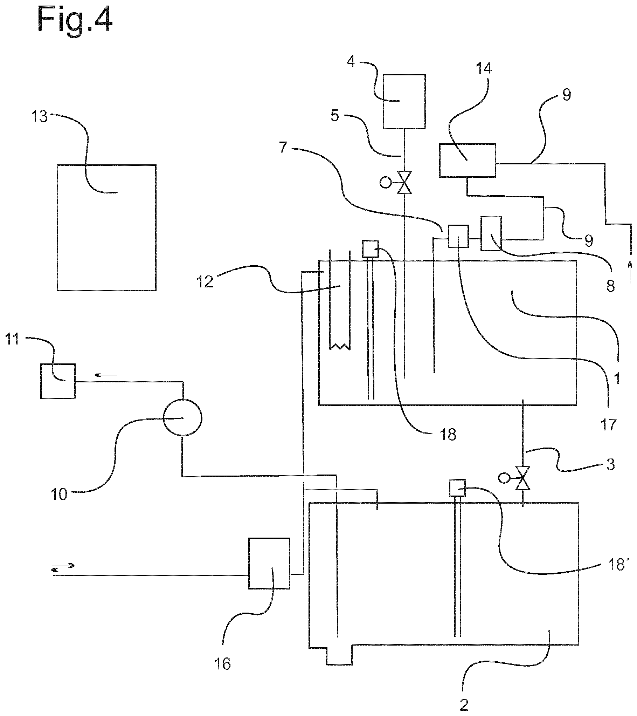

Figur 4 zeigt schematisch den Aufbau einer Vorrichtung, welche sich von der Vorrichtung gemäß Figur 1 lediglich in Anordnung und Ausgestaltung der zweiten Vorratseinheit **4** sowie der Mittel **5** zum Überführen von Flüssigkeit aus der zweiten Vorratseinheit **4** in den Reaktor **1** unterscheidet. Die zweite Vorratseinheit **4** umfasst in der Ausgestaltung gemäß Figur 4 den zweiten Reaktanten vorzugsweise in Form einer flüssigen Lösung, bevorzugt in Form einer wässrigen Lösung. Die zweite Vorratseinheit **4** ist dabei so oberhalb des Reaktors **1** angeordnet, dass eine bzw. die wässrige Lösung des zweiten Reaktanten aus der zweiten Vorratseinheit **4** mittels Schwerkraft in den Reaktor **1** überführbar ist. Die Ausgestaltung entspricht somit technisch der Ausgestaltung des Flüssigkeitstransports vom Reaktor 1 in den Vorratsbehälter **2.** Die entsprechenden Ausführungen zu Figur 1 gelten insoweit entsprechend. Insbesondere ist in der Ausgestaltung gemäß Figur 4 die Leitung **5** mit einem Ventil ausgestattet, welches eine kontrollierte Zufuhr der Lösung des zweiten Reaktanten (Chlorit) in den Reaktor **1** gestattet. Das Ventil wird von der Steuer- und Regelungseinheit **13** mit überwacht.

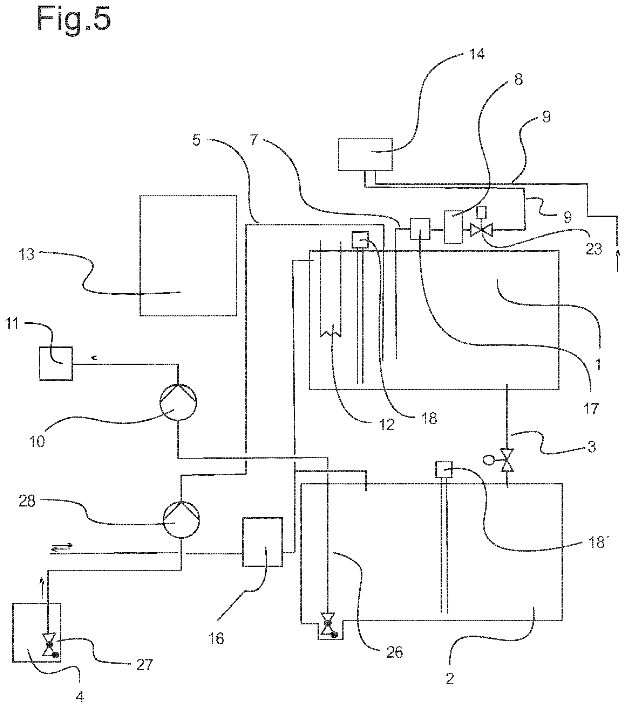

Figur 5 ist eine schematische Zeichnung einer speziellen Ausgestaltung einer erfindungsgemäßen Vorrichtung (Anlage) zur Herstellung wässriger Chlordioxidlösungen gemäß Figur 1. Elemente der Vorrichtung gemäß Figur 5, die Elementen aus der Vorrichtung gemäß Figur 1 funktional zumindest weitgehend entsprechen, sind mit identischen Bezugszeichen bezeichnet.

Zur Inbetriebnahme der in Figur 5 schematisch dargestellten Vorrichtung (Anlage) wird diese über eine Zuleitung **9** mit einem (z.B. öffentlichen) Wassernetz verbunden, welches als Wasservorrat dient. Benötigt wird lediglich ein Kaltwasseranschluss. Ebenso wird die Vorrichtung mit einem Stromnetz verbunden. Benötigt wird eine Versorgungsspannung von 230V bei einer Frequenz von 50 Hz.

Eine vollständige Inbetriebnahme umfasst die nachfolgend aufgeführten Schritte:
- Vorratseinheit **8** umfassend ein Gemisch aus Natriumperoxodisulfat und Natriumhydrogensulfat (siehe oben) einsetzen, Schnellverschlüsse schließen;
- Be- und Entlüftungssystem **16** beginnt automatisch, eventuell durch die Wasservorlage durchgedrungene Chlordioxid-Gase abzusaugen, stoppt automatisch, sobald Schnellverschlüsse geschlossen und Anlage damit wieder ausreichend gasdicht geschlossen ist;
- an der Steuer- und Regelungseinheit **13** bestätigen, dass eine frische (Wechsel-)Vorratseinheit **8** eingesetzt wurde;
- eine Schlauchpumpe **28** beginnt, Chlorit-Lösung aus der Vorratseinheit **4** mittels einer Sauglanze mit Fußventil **27** über die Leitung **5** in den zuvor leeren Reaktor **1** zu pumpen. Der Füllstand im Reaktor 1 wird durch eine Füllstandssonde **18** erfasst und durch die Steuer- und Regelungseinheit **13** kontrolliert.
- Sobald ein Füllstand von 2 Litern Chlorit-Lösung im Reaktor 1 erreicht wird, stoppt die Schlauchpumpe **28;**
- Magnetventil **23** wird geöffnet und Wasser (aus einem Wasservorrat) wird durch einen Durchflusserhitzer **14** auf über 30°C erwärmt und strömt durch die Vorratseinheit **8.** Im warmen Wasser löst sich das endotherm reagierende Gemisch aus Natriumperoxodisulfat und Natriumhydrogensulfat sehr gut und wird in den Reaktionsbehälter gespült, bis dort insgesamt ein Füllstand von 20 Litern erreicht ist. Das Steuer- und Regelungseinheit **13** veranlasst dann, dass das Magnetventil **23** geschlossen wird.
- Ein Heizstab mit Glaszylinder und Thermostat **12** beginnt den Reaktorinnenraum zu heizen.
- Etwaiges durch die in den Reaktor **1** eintretende Flüssigkeit verdrängtes chlordioxidhaltiges Gas wird durch ein mit beiden Reaktor **1** und Vorratsbehälter **2** verbundenes Be- und Entlüftungssystem **16,** das eine Aktivkohlefüllung umfasst, so gefiltert, dass eine Beeinträchtigung der Umgebungsluft verhindert wird. Die Aktivkohle reduziert hierbei das Chlordioxid.
- Ein Timer in der Steuer- und Regelungseinheit **13** beginnt, 24 Stunden abzuzählen.
- Der Heizstab mit Glaszylinder und Thermostat **12** hält, geregelt durch die Steuer- und Regelungseinheit **13,** das chlordioxidhaltige Reaktionsgemisch bei einer Temperatur von 30°C.
- Nach einer Reifephase von 24 Stunden bei mindestens 30°C öffnet sich automatisch ein elektrischer Kugelhahn in der Leitung **3** zwischen Reaktor **1** und Vorratsbehälter **2** und lässt die fertige Chlordioxid-Lösung in den Vorratsbehälter **2** ab.
- Es kann nun mit einer Magnetmembranpumpe **10** die fertig angesetzte Chlordioxid-Lösung mit einer Sauglanze mit Fußventil **26** aus dem Vorratsbehälter **2** entnommen werden und in das nicht weiter dargestellte System **11,** welches einer Desinfektion mit einer wässrigen Chlordioxid-Lösung bedarf, eindosiert werden.
- Sollte irgendwo in dem Generatorsystem oder der Schlauchpumpe eine Leckage auftreten und Flüssigkeit austreten, wird diese durch eine Auffangwanne (nicht im Detail dargestellt) für Tropfmengen aufgefangen. Diese Auffangwanne wird mit einer elektrischen Zweistabsonde überwacht, welche bei Aktivierung das gesamte System komplett ausschaltet; eine Alarmleuchte beginnt in diesem Fall zu blinken.

Ein Ansetzvorgang im laufenden Betrieb kann beispielhaft folgende Schritte umfassen:
- Nach der Inbetriebnahme ist der Vorratsbehälter **2** mit 20 Liter fertiger Chlordioxid-Lösung befüllt und der Reaktor **1** leer.
- Eine Magnetmembranpumpe **10** entnimmt aus dem Vorratsbehälter **2** Chlordioxid-Lösung.
- Von nun an kann eine frische (Wechsel-)Vorratseinheit **8** eingesetzt und das Einsetzen an der Steuer- und Regelungseinheit **13** bestätigt werden.
- An der Steuer- und Regelungseinheit **13** wird eine Mindestmenge in Litern an Chlordioxid-Lösung eingestellt, die im Vorratsbehälter **2** vorrätig sein muss (Meldebestand); bei Unterschreiten der Mindestmenge sollte neue Chlordioxid-Lösung angesetzt werden, um eine kontinuierliche Dosierung zu gewährleisten. Der Meldebestand sollte so groß gewählt werden, dass die Restmenge im Vorratsbehälter **2** mindestens so lange vorhält, bis neue Chlordioxid-Lösung betriebsbereit gereift ist, der Meldebestand sollte also so groß gewählt werden, dass die Restmenge im Vorratsbehälter **2** mindestens 24 Stunden vorhält.
- Der Inhalt des Vorratsbehälters **2** wird über eine Füllstandssonde **18** ständig von der Steuer- und Regelungseinheit **13** überwacht.
- Bei Unterschreiten der Meldebestand-Menge, also sobald eine genügend große Reserve Chlordioxid-Lösung für mindestens 24 Stunden Betrieb nicht mehr vorliegt, löst die Steuer- und Regelungseinheit **13** das Ansetzen einer neuen Chlordioxid-Lösung im Reaktor **1** aus, sofern eine Vorratseinheit **8** eingesetzt und dieser Vorgang bestätigt wurde.
- Sollte bis zu diesem Zeitpunkt noch keine neue Vorratseinheit **8** eingesetzt und bestätigt worden sein, fängt eine Warnleuchte an zu blinken und zeigt damit, dass eine neue Vorratseinheit **8** eingesetzt werden muss.
- Bei eingesetzter Vorratseinheit **8** beginnt die Schlauchpumpe **28** damit, in den leeren Reaktor **1** Chlorit-Lösung zu pumpen. Der Füllstand in Reaktor **1** und Vorratsbehälter **2** wird durch Füllstandssonden **18, 18'** erfasst und mittels der Steuer- und Regelungseinheit **13** kontrolliert.
- Sobald 2 Liter Chlorit-Lösung in den Reaktor **1** hineingepumpt wurden, stoppt die Schlauchpumpe **28,** veranlasst durch die Steuer- und Regelungseinheit **13.**
- Magnetventil **23** wird geöffnet und Wasser (aus einem Wasservorrat) wird durch einen Durchflusserhitzer **14** auf über 30°C erwärmt und strömt durch die Vorratseinheit **8.** Im warmen Wasser löst sich das endotherm reagierende Gemisch aus Natriumperoxodisulfat und Natriumhydrogensulfat sehr gut und wird in den Reaktionsbehälter gespült, bis dort insgesamt ein Füllstand von 20 Litern erreicht ist. Das Steuer- und Regelungseinheit **13** veranlasst dann, dass das Magnetventil **23** geschlossen wird.
- Ein Heizstab mit Glaszylinder und Thermostat **12** beginnt den Reaktorinnenraum zu heizen.
- Ein Timer in der Steuer- und Regelungseinheit **13** beginnt, 24 Stunden abzuzählen.
- Der Heizstab mit Glaszylinder und Thermostat **12** hält, geregelt durch die Steuer- und Regelungseinheit **13,** das chlordioxidhaltige Reaktionsgemisch bei einer Temperatur von 30°C.
- In der Steuer- und Regelungseinheit **13** ist ein Wert für den Reservebestand von z.B. 1 Liter für den Vorratsbehälter **2** vorgegeben. Bei Überschreiten der 24-stündigen Reifephase und Unterschreiten des Wertes für den Reservebestand öffnet sich automatisch ein elektrischer Kugelhahn in der Leitung **3** zwischen Reaktor **1** und Vorratsbehälter **2** und lässt die fertige Chlordioxid-Lösung in den Vorratsbehälter **2** ab.
- Es kann nun mit einer Magnetmembranpumpe **10** die fertig angesetzte Chlordioxid -Lösung in das nicht weiter dargestellte System **11** eindosiert werden, welches einer Desinfektion mit einer wässrigen Chlordioxid-Lösung bedarf.

Nachfolgend werden zwei Anwendungsbeispiele angegeben, die jeweils die Herstellung wässriger Chlordioxid-Lösungen in einer erfindungsgemäßen Vorrichtung betreffen.

### Anwendungsbeispiel 1: Herstellung einer wässrigen Chlordioxid-Lösung nach dem Peroxodisulfat-Chlorit-Verfahren (erste Vorratseinheit umfasst Chlorit in fester Form):

7,9 Liter einer 20 g Na₂S₂O₈/L enthaltenden Lösung, die durch einen Carbonatpuffer oder einen Phosphatpuffer im pH-Bereich zwischen 6 und 7 gepuffert wird, werden im Reaktor vorgelegt. In einer ersten Vorratseinheit befinden sich 100 g eines handelsüblichen Natriumchloritsalzes (80 % Natriumchlorit, 20% Natriumchlorid) welches in der Vorratseinheit durch 12,1 Liter erwärmtes Wasser gelöst wird und durch tangentiale Anströmung im Reaktor mit der Natriumperoxodisulfatlösung vermischt wird. Im Reaktor wird eine Temperatur von 30 °C für 24 Stunden eingestellt. Es ist zu berücksichtigen, dass tiefere Reaktionstemperaturen für einen nahezu vollständigen Umsatz des Chlorits zu Chlordioxid längere Reaktionszeiten bedingen (z.B. 20°C; 120 Stunden Reaktionszeit). Nach der Reaktionszeit wird die chlorhaltige Chlordioxidlösung in einen Vorratsbehälter überführt. Der Reaktor steht im Anschluss für einen neuen Ansatz zur Verfügung.

Vor Überführung in den Reaktor lag die Natriumperoxodisulfatlösung in einer zweiten Vorratseinheit vor. Die erste Vorratseinheit ist auf erfindungsgemäße Weise ausgestaltet (Einlauf für Wasser; davon getrennter Auslass; auswechselbar angeordnet).

### Anwendungsbeispiel 2: Herstellung einer wässrigen Chlordioxid-Lösung nach dem Peroxodisulfat-Chlorit-Verfahren (erste Vorratseinheit umfasst Natriumperoxodisulfat in fester Form):

2,0 Liter einer 30 g ClO₂⁻/L enthaltenden alkalischen Lösung (pH 11,5), die durch ein Carbonat oder ein Phosphat im pH-Bereich zwischen 6 und 7 nach Zugabe der sauren Natriumperoxodisulfatkomponente gepuffert wird, werden im Reaktor vorgelegt. In einer ersten Vorratseinheit befinden sich 140 g Natriumperoxodisulfatsalz welches in der Vorratseinheit durch 18,0 Liter erwärmtes Wasser gelöst wird und durch tangentiale Anströmung im Reaktor mit der Natriumchloritlösung vermischt wird. Im Reaktor wird eine Temperatur von 30 °C für 24 Stunden eingestellt. Es ist zu berücksichtigen, dass tiefere Reaktionstemperaturen für einen nahezu vollständigen Umsatz des Chlorits zu Chlordioxid längere Reaktionszeiten bedingen (z.B. 20°C; 120 Stunden Reaktionszeit). Nach der Reaktionszeit wird die chlorfreie Chlordioxidlösung in einen Vorratsbehälter überführt. Der Reaktor steht im Anschluss für einen neuen Ansatz zur Verfügung.

Vor Überführung in den Reaktor lag die alkalische Chloritlösung (ClO₂⁻) in einer zweiten Vorratseinheit vor. Die erste Vorratseinheit ist auf erfindungsgemäße Weise ausgestaltet (Einlauf für Wasser; davon getrennter Auslass; auswechselbar angeordnet).

### Anwendungsbeispiel 3: Herstellung einer wässrigen Chlordioxid-Lösung nach dem Natriumchlorit-Salzsäure-Verfahren (erste Vorratseinheit umfasst Chlorit in fester Form):

3 Liter einer 10 Gew% igen Salzsäure-Lösung werden im Reaktor vorgelegt. In der ersten Vorratseinheit befinden sich 100 g eines handelsüblichen Natriumchloritsalzes (80 % Natriumchlorit, 20% Natriumchlorid) welches in der ersten Vorratseinheit durch 17 Liter Wasser gelöst wird und durch tangentiale Ausströmung im Reaktor mit der Salzsäurelösung vermischt wird. Ein nahezu vollständiger Umsatz des Chlorits zu Chlordioxid ist nach 2 Stunden erreicht. Nach der Reaktionszeit wird die Chlordioxidlösung, die ca. 3 g Chlordioxid/L enthält in einen Vorratsbehälter überführt. Der Reaktor steht im Anschluss für einen neuen Ansatz zur Verfügung.

Vor Überführung in den Reaktor lag die 10 Gew% ige Salzsäure-Lösung in einer zweiten Vorratseinheit vor. Die erste Vorratseinheit ist auf erfindungsgemäße Weise ausgestaltet (Einlauf für Wasser; davon getrennter Auslass; auswechselbar angeordnet).

### Anwendungsbeispiel 4: Herstellung einer wässrigen Chlordioxid-Lösung nach dem Chlorlösung : Chloritlösung Verfahren (Chemismus siehe: White, G.C.; Handbook of Chlorination and alternative Disinfectants; John Wiley & Sons, Inc., Weinheim, 1999; S.1162) (erste Vorratseinheit umfasst Chlorit und Hypochlorit in fester Form):

1 Liter einer 37 Gew% igen Salzsäure-Lösung werden im Reaktor vorgelegt. In der ersten Vorratseinheit befinden sich 100 g eines handelsüblichen Natriumchloritsalzes (80 % Natriumchlorit, 20% Natriumchlorid) und 32 g Calciumhypochlorit (Ca(ClO)₂), das mit dem handelsüblichen Natriumchloritsalz vermengt ist. Dieses Gemenge wird in der ersten Vorratseinheit durch 17 Liter Wasser gelöst und durch tangentiale Ausströmung im Reaktor mit der Salzsäurelösung vermischt. Ein nahezu vollständiger Umsatz des Chlorits mit der sich im Reaktor ausbildenden unterchlorigen Säure zu Chlordioxid ist nach 15 Minuten erreicht. Nach der Reaktionszeit wird die Chlordioxidlösung, die ca. 3 g Chlordioxid/L enthält in einen Vorratsbehälter überführt. Der Reaktor steht im Anschluss für einen neuen Ansatz zur Verfügung.

Vor Überführung in den Reaktor lag die 37 Gew% ige Salzsäure-Lösung in einer zweiten Vorratseinheit vor. Die erste Vorratseinheit ist auf erfindungsgemäße Weise ausgestaltet (Einlauf für Wasser; davon getrennter Auslass; auswechselbar angeordnet).

### Anwendungsbeispiel 5: Herstellung einer wässrigen Chlordioxid-Lösung nach dem Natriumchlorit-Lösung Schwefelsäure-Verfahren (Chemismus siehe: Böhmländer, F.; Entwicklung von Chlordioxyd aus Natriumchlorit-Lösung mit Hilfe von Schwefelsäure; Vom Wasser 29 (78) 1962, S.78 - 97)(erste Vorratseinheit umfasst Chlorit in fester Form):

1 Liter einer 60 Gew% igen Schwefelsäure-Lösung werden im Reaktor vorgelegt. In der ersten Vorratseinheit befinden sich 120 g eines handelsüblichen Natriumchloritsalzes (80 % Natriumchlorit, 20% Natriumchlorid) und 40 g Natriumchlorid (NaCl), das mit dem handelsüblichen Natriumchloritsalz vermengt ist. Dieses Gemenge in der ersten Vorratseinheit wird durch 19 Liter Wasser gelöst und durch tangentiale Ausströmung im Reaktor mit der Schwefelsäurelösung vermischt. Ein nahezu vollständiger Umsatz des Chlorits zu Chlordioxid ist nach 2 Stunden erreicht. Nach der Reaktionszeit wird die Chlordioxidlösung, die ca. 3 g Chlordioxid/L enthält in einen Vorratsbehälter überführt. Der Reaktor steht im Anschluss für einen neuen Ansatz zur Verfügung.

Vor Überführung in den Reaktor lag die 60 Gew% ige Schwefelsäure-Lösung in einer zweiten Vorratseinheit vor. Die erste Vorratseinheit ist auf erfindungsgemäße Weise ausgestaltet (Einlauf für Wasser; davon getrennter Auslass; auswechselbar angeordnet).

### Anwendungsbeispiel 6: Herstellung einer wässrigen Chlordioxid-Lösung nach dem Natriumchlorit-Lösung Schwefelsäure-Verfahren (Chemismus siehe: Böhmländer, F.; Entwicklung von Chlordioxyd aus Natriumchlorit-Lösung mit Hilfe von Schwefelsäure; Vom Wasser 29 (78) 1962, S.78 - 97) (erste Vorratseinheit umfasst Natriumhydrogensulfat in fester Form):

2,0 Liter einer wässrigen 30 g ClO₂⁻/L enthaltenden alkalischen Lösung (pH 11,5) werden im Reaktor vorgelegt. In der ersten Vorratseinheit befinden sich 800 g des sauren Salzes der Schwefelsäure (Natriumhydrogensulfat) im Gemenge mit 100 g Natriumchlorid. Dieses Gemenge wird in der ersten Vorratseinheit durch 18 Liter Wasser gelöst wird und durch tangentiale Ausströmung im Reaktor mit der Chloritlösung vermischt wird. Ein nahezu vollständiger stöchiometrischer Umsatz des Chlorits zu Chlordioxid ist nach 2 Stunden erreicht. Nach der Reaktionszeit wird die Chlordioxidlösung, die ca. 3 g Chlordioxid/L enthält in einen Vorratsbehälter überführt. Der Reaktor steht im Anschluss für einen neuen Ansatz zur Verfügung.

Vor Überführung in den Reaktor lag die wässrige 30 g ClO₂⁻/L enthaltende alkalische Lösung in einer zweiten Vorratseinheit vor. Die erste Vorratseinheit ist auf erfindungsgemäße Weise ausgestaltet (Einlauf für Wasser; davon getrennter Auslass; auswechselbar angeordnet).

### Anwendungsbeispiel 7: Herstellung einer wässrigen Chlordioxid-Lösung nach dem Natriumchlorit-Lösung Schwefelsäure-Verfahren (Chemismus siehe: Böhmländer, F.; Entwicklung von Chlordioxyd aus Natriumchlorit-Lösung mit Hilfe von Schwefelsäure; Vom Wasser 29 (78) 1962, S.78 - 97) (zweite Vorratseinheit umfasst Natriumhydrogensulfat in fester Form, erste Vorratseinheit enthält handelsübliches Natriumchlorit (80% NaClO₂ und 20% NaCl) in fester Form):

In der zweiten Vorratseinheit befinden sich 800 g des sauren Salzes der Schwefelsäure (Natriumhydrogensulfat), welches in der zweiten Vorratseinheit durch 10 Liter erwärmtes Trinkwasser gelöst und in den Reaktor geleitet wird. In der ersten Vorratseinheit befinden sich 800 g eines handelsüblichen Natriumchlorit - Natriumchlorid Gemenges. Dieses wird im Anschluss durch 10 Liter Trinkwasser und durch tangentiale Ausströmung im Reaktor mit der wässrigen Hydrogensulfatlösung vermischt. Ein nahezu vollständiger stöchiometrischer Umsatz des Chlorits zu Chlordioxid ist nach 2 Stunden erreicht. Nach der Reaktionszeit wird die Chlordioxidlösung, die ca. 4,5 g Chlordioxid/L enthält in einen Vorratsbehälter überführt. Der Reaktor steht im Anschluss für einen neuen Ansatz zur Verfügung.

Vor Überführung in den Reaktor lagen die 800 g Natriumhydrogensulfat in einer zweiten Vorratseinheit vor, die in ihrer Ausführungsform der ersten Vorratseinheit entspricht. Die erste Vorratseinheit ist auf erfindungsgemäße Weise ausgestaltet (Einlauf für Wasser; davon getrennter Auslass; auswechselbar angeordnet).

## Patentansprüche

1. Vorrichtung zur Herstellung wässriger Chlordioxidlösungen, umfassend
(a) einen Reaktor (1),
(b) eine erste Vorratseinheit (8),
- umfassend einen ersten Reaktanten zur Herstellung von Chlordioxid, wobei der erste Reaktant als Feststoff vorliegt,
- mit einem Einlass (15) für Wasser und einem davon getrennten Auslass (21),
- wobei die erste Vorratseinheit (8) auswechselbar angeordnet ist,
(c) eine zweite Vorratseinheit (4) zum Bevorraten eines zweiten Reaktanten zur Herstellung von Chlordioxid,
wobei die erste Vorratseinheit (8) zuleitungs- und/oder ableitungsseitig mit Rohrschnellverschlüssen ausgestattet ist
und/oder
wobei der Einlass für Wasser (15) mittels eines Schnellverschlusses mit der Zuleitung (9) flüssigkeitsdicht verbindbar ist.

2. Vorrichtung nach Anspruch 1, wobei der erste Reaktant in der ersten Vorratseinheit (8) ausgewählt ist aus der Gruppe bestehend aus Peroxodisulfat und Chlorit.

3. Vorrichtung nach einem der vorangehenden Ansprüche, zur Herstellung von unmittelbar zur Wasseraufbereitung einsetzbaren wässrigen Chlordioxidlösungen, vorzugsweise nach dem Peroxodisulfat-Chlorit-Verfahren oder Natriumchlorit-Salzsäure-Verfahren.

4. Vorrichtung nach einem der vorangehenden Ansprüche, weiter umfassend
(d) eine flüssigkeitsdicht mit dem Einlass (15) für Wasser verbundene Zuleitung (9), zum Verbinden der ersten Vorratseinheit (8) mit einem Wasservorrat
sowie gegebenenfalls
(e) eine Einrichtung (14) zum Erwärmen und/oder Kühlen von Wasser, wobei die Einrichtung (14) der Zuleitung (9) so zugeordnet ist, dass
- von ihr erwärmtes oder gekühltes Wasser über die Zuleitung (9) der ersten Vorratseinheit (8) zugeführt wird
und/oder
- Wasser über die Zuleitung (9) der Einrichtung (14) zugeführt wird.

5. Vorrichtung nach einem der vorangehenden Ansprüche, weiter umfassend
(f) Mittel (7) zum Überführen von Flüssigkeit aus der ersten Vorratseinheit (8) in den Reaktor (1),
wobei vorzugsweise
die Mittel (7) eine oder mehrere Rohrleitungen umfassen
und/oder
(g) Mittel (5) zum Überführen von Flüssigkeit aus der zweiten Vorratseinheit (4) in den Reaktor (1),
wobei vorzugsweise
die Mittel (5) eine oder mehrere Rohrleitungen umfassen.

6. Vorrichtung nach einem der vorangehenden Ansprüche, weiter umfassend
(h) einen Vorratsbehälter (2) zur Aufnahme wässriger Chlordioxidlösung aus dem Reaktor (1), wobei der Vorratsbehälter (2) vorzugsweise so unterhalb des Reaktors (1) angeordnet ist, dass wässrige Chlordioxidlösung mittels Schwerkraft aus dem Reaktor (1) in den Vorratsbehälter (2) überführbar ist
sowie vorzugsweise zusätzlich umfassend
(i) eine Dosiereinrichtung (10) zur dosierten Entnahme von wässriger Chlordioxidlösung aus dem Vorratsbehälter (2).

7. Vorrichtung nach einem der vorangehenden Ansprüche,
wobei der erste Reaktant in der ersten Vorratseinheit (8) Peroxodisulfat ist und das Verhältnis aus der Stoffmenge an Peroxodisulfat in der ersten Vorratseinheit (8) zum Volumen des Reaktors (1) kleiner oder gleich 0,148 mol / Liter ist, bevorzugt im Bereich von 0,00148 mmol / Liter bis 0,037 mol / Liter liegt.
oder
wobei der erste Reaktant in der ersten Vorratseinheit (8) Chlorit ist und das Verhältnis aus der Stoffmenge an Chlorit in der ersten Vorratseinheit (8) zum Volumen des Reaktors (1) kleiner oder gleich 0,296 mol / Liter ist, bevorzugt im Bereich von 0,00296 mmol / Liter bis 0,074 mol / Liter liegt.

8. Vorrichtung nach einem der vorangehenden Ansprüche, weiter umfassend
(j) eine Einrichtung (12) zum Beheizen und/oder Kühlen des Reaktors (1), wobei die Einrichtung vorzugsweise eine Steuer- oder Regeleinheit zur Einstellung und/oder zum Konstanthalten einer Soll-Temperatur umfasst
und/oder
(k) eine Sperrvorrichtung (17) zum Verhindern oder Erschweren eines Übertritts von Flüssigkeiten und/oder Gasen aus dem Reaktor (1) in die erste Vorratseinheit (8).

9. Vorrichtung nach einem der vorangehenden Ansprüche, weiter umfassend
(I) eine Steuer- und Regelungseinheit (13) zum Steuern und/oder Regeln
- des Wasserzuflusses zur ersten Vorratseinheit (8) und/oder
- der Einrichtung (14) zum Erwärmen und/oder Kühlen von Wasser, die der Zuleitung (9) zugeordnet ist
und/oder
- der Einrichtung (12) zum Beheizen und/oder Kühlen des Reaktors (1)
und/oder
- der Flüssigkeitsmenge, die aus der zweiten Vorratseinheit (4) in den Reaktor (1) zu überführen ist
und/oder
- der Menge an wässriger Chlordioxidlösung, die aus dem Reaktor (1) in den Vorratsbehälter (2) zu überführen ist
und/oder
- der Dosiereinrichtung (10) zur dosierten Entnahme von wässriger Chlordioxidlösung aus dem Vorratsbehälter (2).

10. Vorrichtung nach einem der vorangehenden Ansprüche, wobei
die zweite Vorratseinheit (4) den zweiten Reaktanten umfasst, vorzugsweise in Form einer flüssigen Lösung, bevorzugt in Form einer wässrigen Lösung,
und/oder
die zweite Vorratseinheit (4) so oberhalb des Reaktors (1) angeordnet ist, dass eine bzw. die wässrige Lösung des zweiten Reaktanten aus der zweiten Vorratseinheit (4) mittels Schwerkraft in den Reaktor (1) überführbar ist.

11. Vorrichtung nach einem der vorangehenden Ansprüche, wobei
die zweite Vorratseinheit (4') den zweiten Reaktanten umfasst und einen Einlass (15) für Wasser und einen davon getrennten Auslass (21) besitzt, wobei die zweite Vorratseinheit (4') auswechselbar angeordnet ist und wobei vorzugsweise der zweite Reaktant in der zweiten Vorratseinheit (4') als Feststoff vorliegt.

12. Vorrichtung nach einem der vorangehenden Ansprüche, weiter umfassend ein erstes Magazin zur Aufnahme von einer, zwei oder mehr Wechsel-Vorratseinheiten für die erste Vorratseinheit (8).

13. Auswechselbare Vorratseinheit (8) für eine Vorrichtung nach einem der vorangehenden Ansprüche, umfassend einen ersten Reaktanten zur Herstellung von Chlordioxid, mit einem Einlass (15) für Wasser und einem davon getrennten Auslass (21),
wobei der erste Reaktant als Feststoff vorliegt,
wobei
die auswechselbare Vorratseinheit insgesamt, alternativ zumindest ihr den ersten Reaktanten umfassender Innenraum luft- und/oder feuchtigkeitsdicht abgeschlossen ist
und wobei
die auswechselbare Vorratseinheit zuleitungs- und/oder ableitungsseitig mit Rohrschnellverschlüssen ausgestattet ist
und/oder
der Einlass (15) mittels eines Schnellverschlusses mit einer Zuleitung (9) flüssigkeitsdicht verbindbar ist.

14. Kit umfassend oder bestehend aus
einer, zwei oder mehr auswechselbaren ersten Vorratseinheiten (8) nach Anspruch 13 umfassend einen ersten Reaktanten zur Herstellung von Chlordioxid
sowie zusätzlich
(i) einer, zwei oder mehr zweiten Vorratseinheiten (4) umfassend einen zweiten Reaktanten zur Herstellung von Chlordioxid
und/oder
(ii) einem Magazin zur Aufnahme der ein, zwei oder mehr auswechselbaren ersten Vorratseinheiten (8).

15. Verfahren zur Herstellung einer Chlordioxid enthaltenden, unmittelbar zur Wasseraufbereitung einsetzbaren Lösung mit folgenden Schritten:
Herstellen eines wässrigen Reaktionsgemischs enthaltend Chlorit und Peroxodisulfat in einem Reaktor (1),
wobei zum Herstellen des Reaktionsgemisches in dem Reaktor (1) eine auswechselbare Vorratseinheit (8) nach Anspruch 13, umfassend eine Menge eines ersten Reaktanten ausgewählt aus der Gruppe bestehend aus Chlorit und Peroxodisulfat, wobei der erste Reaktant als Feststoff vorliegt, so mit Wasser durchspült wird, dass eine wässrige Lösung des ersten Reaktanten resultiert, welche in den Reaktor (1) eingeleitet wird,
wobei vorzugsweise die auswechselbare Vorratseinheit (8) umfassend den ersten Reaktanten so mit Wasser durchspült wird, dass eine wässrige Lösung der gesamten Menge des ersten Reaktanten resultiert, welche in den Reaktor (1) eingeleitet wird.

## Claims

1. Apparatus for preparing aqueous chlorine dioxide solutions, comprising
(a) a reactor (1),
(b) a first reservoir unit (8),
- comprising a first reactant for preparation of chlorine dioxide, the first reactant being in solid form,
- having an inlet (15) for water and a separate outlet (21),
- the first reservoir unit (8) being exchangeable,
(c) a second reservoir unit (4) for storing a second reactant for preparation of chlorine dioxide, wherein the first reservoir unit (8) is provided with quick-fit pipe connections on the inlet and/or outlet side
and/or
wherein the inlet for water (15) can be connected liquid-tight by means of a quick-fit connection to the feed (9).

2. Apparatus according to Claim 1, wherein the first reactant in the first reservoir unit (8) is selected from the group consisting of peroxodisulfate and chlorite.

3. Apparatus according to either of the preceding claims for preparation of aqueous chlorine dioxide solutions usable directly for water treatment, preferably by the peroxodisulfate-chlorite process or sodium chlorite-hydrochloric acid process.

4. Apparatus according to any of the preceding claims, further comprising
(d) a feed (9) connected liquid-tight to the inlet (15) for water, for connection of the first reservoir unit (8) to a water reservoir,
and optionally
(e) a device (14) for heating and/or cooling water, the relationship of the device (14) to the feed (9) being such that
- water heated or cooled by the device (14) is fed via the feed (9) to the first reservoir unit (8)
and/or
- water is fed via the feed (9) to the device (14) .

5. Apparatus according to any of the preceding claims, further comprising
(f) means (7) for transferring liquid from the first reservoir unit (8) into the reactor (1),
the means (7) preferably comprising one or more pipelines,
and/or
(g) means (5) for transferring liquid from the second reservoir unit (4) into the reactor (1),
the means (5) preferably comprising one or more pipelines.

6. Apparatus according to any of the preceding claims, further comprising
(h) a reservoir vessel (2) for accommodating aqueous chlorine dioxide solution from the reactor (1), the reservoir vessel (2) preferably being disposed beneath the reactor (1) such that aqueous chlorine dioxide solution can be transferred by means of gravity from the reactor (1) to the reservoir vessel (2),
and preferably additionally comprising
(i) a metering device (10) for metered withdrawal of aqueous chlorine dioxide solution from the reservoir vessel (2).

7. Apparatus according to any of the preceding claims, wherein the first reactant in the first reservoir unit (8) is peroxodisulfate and the ratio of the molar amount of peroxodisulfate in the first reservoir unit (8) to the volume of the reactor (1) is less than or equal to 0.148 mol/liter, preferably in the range from 0.00148 mmol/liter to 0.037 mol/liter,
or
wherein the first reactant in the first reservoir unit (8) is chlorite and the ratio of the molar amount of chlorite in the first reservoir unit (8) to the volume of the reactor (1) is less than or equal to 0.296 mol/liter, preferably in the range from 0.00296 mmol/liter to 0.074 mol/liter.

8. Apparatus according to any of the preceding claims, further comprising
(j) a device (12) for heating and/or cooling the reactor (1), the device preferably comprising an open-loop or closed-loop control unit for establishing a target temperature and/or maintaining a constant target temperature,
and/or
(k) a barrier apparatus (17) for preventing or hindering liquids and/or gases from passing over from the reactor (1) into the first reservoir unit (8).

9. Apparatus according to any of the preceding claims, further comprising
(1) an open-loop and closed-loop control unit (13) for controlling
- the water flow to the first reservoir unit (8) and/or
- the device (14) for heating and/or cooling water, which device is related to the feed (9),
and/or
- the device (12) for heating and/or cooling the reactor (1)
and/or
- the liquid volume to be transferred from the second reservoir unit (4) to the reactor (1)
and/or
- the volume of aqueous chlorine dioxide solution to be transferred from the reactor (1) to the reservoir vessel (2)
and/or
- the metering device (10) for metered withdrawal of aqueous chlorine dioxide solution from the reservoir vessel (2).

10. Apparatus according to any of the preceding claims, wherein
the second reservoir unit (4) comprises the second reactant, preferably in the form of a liquid solution, more preferably in the form of an aqueous solution,
and/or
the second reservoir unit (4) is arranged above the reactor (1) such that a or the aqueous solution of the second reactant can be transferred from the second reservoir unit (4) by means of gravity into the reactor (1).

11. Apparatus according to any of the preceding claims, wherein
the second reservoir unit (4') comprises the second reactant and has an inlet (15) for water and a separate outlet (21), the second reservoir unit (4') being exchangeable and the second reactant in the second reservoir unit (4') preferably being in solid form.

12. Apparatus according to any of the preceding claims, further comprising a first magazine for accommodating one, two or more replacement reservoir units for the first reservoir unit (8).

13. Exchangeable reservoir unit (8) for an apparatus according to any of the preceding claims, comprising a first reactant for preparation of chlorine dioxide, with an inlet (15) for water and a separate outlet (21),
the first reactant being in solid form,
the exchangeable reservoir unit is sealed in an air- and/or moisture-tight manner in its entirety, or alternatively at least the interior thereof comprising the first reactant
and wherein
the exchangeable reservoir unit is provided with quick-fit pipe connections on the inlet and/or outlet side
and/or
the inlet (15) can be connected liquid-tight by means of a quick-fit connection to a feed (9).

14. Kit comprising or consisting of
one, two or more exchangeable first reservoir units (8) according to Claim 13, comprising a first reactant for preparation of chlorine dioxide and additionally
(i) one, two or more second reservoir units (4) comprising a second reactant for preparation of chlorine dioxide
and/or
(ii)a magazine for accommodating the one, two or more exchangeable first reservoir units (8).

15. Process for preparing a chlorine dioxide-containing solution usable directly for water treatment, having the following steps:
preparing an aqueous reaction mixture comprising chlorite and peroxodisulfate in a reactor (1),
the reaction mixture being prepared in the reactor (1) by purging an exchangeable reservoir unit (8) according to Claim 13, comprising an amount of a first reactant selected from the group consisting of chlorite and peroxodisulfate, the first reactant being in solid form, with water so as to result in an aqueous solution of the first reactant which is introduced into the reactor (1),
the exchangeable reservoir unit (8) comprising the first reactant preferably being purged with water so as to result in an aqueous solution of the entire amount of the first reactant which is introduced into the reactor (1).

## Revendications

1. Dispositif de production de solutions aqueuses de dioxyde de chlore, comprenant
(a) un réacteur (1),
(b) une première unité de stockage (8),
- comprenant un premier agent réactif pour la production de dioxyde de chlore, dans lequel le premier agent réactif se présente sous la forme d'une matière solide,
- dotée d'une entrée (15) pour l'eau et d'une sortie (21) séparée de celle-ci
- dans lequel la première unité de stockage (8) est disposée de manière interchangeable,
(c) une seconde unité de stockage (4) pour stocker un second agent réactif pour la production de dioxyde de chlore,
dans lequel la première unité de stockage (8) est équipée de fermetures rapides de tube du côté de la conduite d'acheminement et/ou de la conduite d'évacuation
et/ou
dans lequel l'entrée pour l'eau (15) peut être reliée au moyen d'une fermeture rapide avec la conduite d'acheminement (9) de façon étanche aux fluides.

2. Dispositif selon la revendication 1, dans lequel le premier agent réactif dans la première unité de stockage (8) est choisi dans le groupe constitué de peroxodisulfate et de chlorite.

3. Dispositif selon l'une quelconque des revendications précédentes, pour la production de solutions aqueuses de dioxyde de chlore utilisables directement pour le traitement de l'eau, de préférence selon le procédé au peroxodisulfate-chlorite ou selon le procédé au chlorite de sodium-acide chlorhydrique.

4. Dispositif selon l'une quelconque des revendications précédentes, comprenant en outre
(d) une conduite d'acheminement (9) reliée de façon étanche aux fluides avec l'entrée (15) pour l'eau, pour relier la première unité de stockage (8) avec une réserve d'eau
ainsi que le cas échéant
(e) un système (14) pour réchauffer et/ou refroidir de l'eau, dans lequel le système (14) est affecté à la conduite d'acheminement (9) de telle sorte que
- de celle-ci, de l'eau réchauffée ou refroidie est acheminée par la conduite d'acheminement (9) de la première unité de stockage (8)
et/ou
- de l'eau est acheminée par la conduite d'acheminement (9) au système (14).

5. Dispositif selon l'une quelconque des revendications précédentes, comprenant en outre
(f) des moyens (7) pour faire passer un fluide de la première unité de stockage (8) dans le réacteur (1),
dans lequel de préférence
les moyens (7) comprennent une ou plusieurs conduites tubulaires
et/ou
(g) des moyens (5) pour faire passer un fluide de la seconde unité de stockage (4) dans le réacteur (1), dans lequel de préférence
les moyens (5) comprennent une ou plusieurs conduites tubulaires.

6. Dispositif selon l'une quelconque des revendications précédentes, comprenant en outre
(h) un récipient de stockage (2) pour la réception de solution aqueuse de dioxyde de chlore provenant du réacteur (1), dans lequel le récipient de stockage (2) est disposé de préférence sous le réacteur (1) de telle sorte que de la solution aqueuse de dioxyde de chlore puisse passer au moyen de la force de gravité du réacteur (1) dans le récipient de stockage (2)
ainsi que comprenant de plus de préférence
(i) un système de dosage (10) pour le prélèvement dosé de solution aqueuse de dioxyde de chlore en provenance du récipient de stockage (2).

7. Dispositif selon l'une quelconque des revendications précédentes,
dans lequel le premier agent réactif dans la première unité de stockage (8) est du peroxodisulfate et le rapport de la quantité de substance de peroxodisulfate dans la première unité de stockage (8) au volume du réacteur (1) est inférieur ou égal à 0,148 mole/litre, de manière préférée se situe dans la plage de 0,00148 mmole/litre à 0,037 mole/litre,
ou
dans lequel le premier agent réactif dans la première unité de stockage (8) est du chlorite et le rapport de la quantité de substance de chlorite dans la première unité de stockage (8) au volume du réacteur (1) est inférieur ou égal à 0,296 mole/litre, de manière préférée se situe dans la plage de 0,00296 mmole/litre à 0,074 mole/litre.

8. Dispositif selon l'une quelconque des revendications précédentes, comprenant en outre
(j) un système (12) pour chauffer et/ou refroidir le réacteur (1), dans lequel le système comprend de préférence une unité de commande ou de régulation pour le réglage et/ou le maintien à un niveau constant d'une température de consigne
et/ou
(k) un dispositif de blocage (17) pour empêcher ou compliquer un débordement de fluides et/ou de gaz du réacteur (1) dans la première unité de stockage (8).

9. Dispositif selon l'une quelconque des revendications précédentes, comprenant en outre
(1) une unité de commande et de régulation (13) pour commander et/ou réguler
- le débit d'eau vers la première unité de stockage (8)
et/ou
- le système (14) pour réchauffer et/ou refroidir l'eau qui est affectée à la conduite d'acheminement (9) et/ou
- le système (12) pour chauffer et/ou refroidir le réacteur (1)
et/ou
- la quantité de fluide qui doit passer de la seconde unité de stockage (4) dans le réacteur (1) et/ou
- la quantité de solution aqueuse de dioxyde de chlore qui doit passer du réacteur (1) dans le récipient de stockage (2)
et/ou
- le système de dosage (10) pour le prélèvement dosé de solution aqueuse de dioxyde de chlore provenant du récipient de stockage (2).

10. Dispositif selon l'une quelconque des revendications précédentes, dans lequel
la seconde unité de stockage (4) comprend le deuxième agent réactif, de préférence sous la forme d'une solution liquide, de manière préférée sous la forme d'une solution aqueuse,
et/ou
la seconde unité de stockage (4) est disposée au-dessus du réacteur (1) de telle sorte qu'une ou la solution aqueuse du second agent réactif puisse passer de la seconde unité de stockage (4) au moyen de la force de gravité dans le réacteur (1).

11. Dispositif selon l'une quelconque des revendications précédentes, dans lequel
la seconde unité de stockage (4') comprend le second agent réactif et possède une entrée (15) pour l'eau et une sortie (21) séparée de celle-ci, dans lequel la seconde unité de stockage (4') est disposée de manière interchangeable et dans lequel de préférence le second agent réactif dans la seconde unité de stockage (4') se présente sous forme de matière solide.

12. Dispositif selon l'une quelconque des revendications précédentes, comprenant en outre un premier magasin pour la réception d'une, deux ou plusieurs unités de stockage de remplacement pour la première unité de stockage (8).

13. Unité de stockage interchangeable (8) pour un dispositif selon l'une quelconque des revendications précédentes, comprenant un premier agent réactif pour la production de dioxyde de chlore, dotée d'une entrée (15) pour l'eau et d'une sortie (21) séparée de celle-ci,
dans laquelle le premier agent réactif se présente sous la forme d'une matière solide,
dans laquelle
l'unité de stockage interchangeable, dans son ensemble, en variante au moins son espace intérieur comprenant le premier agent réactif, est fermé(e) de façon étanche à l'air et/ou à l'humidité,
et dans laquelle
l'unité de stockage interchangeable est équipée, du côté de la conduite d'acheminement et/ou de la conduite d'évacuation, de fermetures rapides de tube
et/ou
l'entrée (15) peut être reliée au moyen d'une fermeture rapide avec une conduite d'acheminement (9) de façon étanche aux fluides.

14. Kit comprenant ou constitué de
une, deux ou plusieurs unités de stockage (8) interchangeables selon la revendication 13 comprenant un premier agent réactif pour la production de dioxyde de chlore
ainsi qu'en plus
(i) une, deux ou plusieurs unités de stockage (4) comprenant un second agent réactif pour la production de dioxyde de chlore
et/ou
(ii) un magasin pour la réception d'une, deux ou plusieurs premières unités de stockage (8) interchangeables.

15. Procédé de production d'une solution contenant du dioxyde de chlore, utilisable directement pour le traitement de l'eau, comportant les étapes suivantes :
production d'un mélange réactionnel aqueux contenant du chlorite et du peroxodisulfate dans un réacteur (1),
dans lequel, pour la production du mélange réactionnel dans le réacteur (1), une unité de stockage interchangeable (8) selon la revendication 13, comprenant une quantité d'un premier agent réactif choisi dans le groupe constitué de chlorite et de peroxodisulfate, dans lequel le premier agent réactif se présente sous forme d'une matière solide, est parcourue avec de l'eau de telle sorte qu'une solution aqueuse du premier agent réactif en résulte, qui est conduite dans le réacteur (1),
dans lequel de préférence l'unité de stockage interchangeable (8) comprenant le premier agent réactif est parcourue avec de l'eau de telle sorte qu'une solution aqueuse de la quantité totale du premier agent réactif en résulte, qui est conduite dans le réacteur (1) .
